(19) Europäisches Patentamt / European Patent Office / Office européen des brevets

(11) **EP 3 101 899 A1**

(12) **EUROPEAN PATENT APPLICATION**
published in accordance with Art. 153(4) EPC

(43) Date of publication:
**07.12.2016 Bulletin 2016/49**

(51) Int Cl.:
*H04N 19/503* (2014.01)      *H04N 19/50* (2014.01)
*H04N 19/51* (2014.01)

(21) Application number: **15760873.8**

(22) Date of filing: **11.03.2015**

(86) International application number:
**PCT/KR2015/002355**

(87) International publication number:
**WO 2015/137723 (17.09.2015 Gazette 2015/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **11.03.2014  US 201461950922 P**

(71) Applicant: **Samsung Electronics Co., Ltd.
Gyeonggi-do 16677 (KR)**

(72) Inventors:
• **LEE, Jin-young
  Suwon-si
  Gyeonggi-do 441-768 (KR)**
• **PARK, Min-woo
  Yongin-si
  Gyeonggi-do 446-955 (KR)**

(74) Representative: **Appleyard Lees IP LLP
15 Clare Road
Halifax HX1 2HY (GB)**

(54) **DISPARITY VECTOR PREDICTING METHOD AND APPARATUS FOR ENCODING INTER-LAYER VIDEO, AND DISPARITY VECTOR PREDICTING METHOD AND APPARATUS FOR DECODING INTER-LAYER VIDEO**

(57)      Provided is an inter-layer video decoding method including obtaining, from a bitstream, depth refinement information indicating whether a disparity vector of a current block of a second layer is obtainable by using a depth image of a first layer; and if the depth refinement information indicates that the depth image of the first layer is available, determining the disparity vector of the current block of the second layer, wherein the disparity vector includes a predetermined second component value and a first component value that is determined by using a base disparity vector and the depth image of the first layer.

FIG. 2A

**Description**

TECHNICAL FIELD

The present disclosure relates to inter-layer video encoding and decoding methods. More particularly, the present disclosure relates to a method of determining a disparity vector in inter-layer video encoding and decoding methods.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial region is transformed into coefficients of a frequency region via frequency transformation. According to a video codec, an image is split into blocks having a predetermined size, discrete cosine transformation (DCT) is performed on each block, and frequency coefficients are encoded in block units, for rapid calculation of frequency transformation. Compared with image data of a spatial region, coefficients of a frequency region are easily compressed. In particular, since an image pixel value of a spatial region is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multi-layer video codec encodes and decodes a first layer video and at least one second layer video. Amounts of data of the first layer video and the second layer video may be reduced by removing temporal/spatial redundancy and layer redundancy of the first layer video and the second layer video.

DETAILED DESCRIPTION OF THE INVENTION

The present disclosure provides inter-layer video encoding and decoding methods capable of improving coding performance and coding accuracy by restricting a vertical component of a disparity vector when the disparity vector is determined by using a depth image.

The technical problems of the present disclosure are not limited to the aforementioned features, and other unstated technical problems will be clearly understood by one of ordinary skill in the art in view of descriptions below.

According to an aspect of the present disclosure, there is provided an inter-layer video decoding method including obtaining, from a bitstream, depth refinement information indicating whether a disparity vector of a current block of a second layer is obtainable by using a depth image of a first layer; and if the depth refinement information indicates that the depth image of the first layer is available, determining the disparity vector of the current block of the second layer, wherein the disparity vector includes a predetermined second component value and a first component value that is determined by using a base disparity vector and the depth image of the first layer.

DESCRIPTION OF THE DRAWINGS

FIG. 1A is a block diagram of an inter-layer video encoding apparatus according to an embodiment.
FIG. 1B is a flowchart of an inter-layer video encoding method according to an embodiment.
FIG. 2A is a block diagram of an inter-layer video decoding apparatus according to an embodiment.
FIG. 2B is a flowchart of an inter-layer video decoding method according to an embodiment.
FIG. 3 illustrates an inter-layer prediction structure according to an embodiment.
FIG. 4A is a diagram for describing a disparity vector for inter-layer prediction, according to an embodiment.
FIG. 4B illustrates an example in which a disparity vector is obtained by using a spatial neighboring block of a current block, according to an embodiment.
FIG. 4C illustrates an example in which a disparity vector is obtained by using a temporal neighboring block of a current block, according to an embodiment.
FIG. 5 illustrates a procedure of determining a disparity vector of a current block by using a depth image, according to an embodiment.
FIG. 6A is a flowchart of a method of determining a disparity vector of a current block, according to an embodiment.
FIG. 6B is a flowchart of a method of determining a disparity vector of a current block, according to an embodiment.

FIG. 6C is a flowchart of a method of determining a base disparity vector, according to an embodiment.

FIG. 7 illustrates sequence parameter set (SPS) multiview extension information according to an embodiment.

FIG. 8 is a block diagram of a video encoding apparatus based on coding units according to a tree structure, according to an embodiment.

FIG. 9 is a block diagram of a video decoding apparatus based on coding units according to a tree structure, according to an embodiment.

FIG. 10 is a diagram for describing a concept of coding units according to various embodiments of the present disclosure.

FIG. 11 is a block diagram of an image encoder based on coding units, according to various embodiments of the present disclosure.

FIG. 12 is a block diagram of an image decoder based on coding units, according to various embodiments of the present disclosure.

FIG. 13 is a diagram illustrating coding units and partitions, according to various embodiments of the present disclosure.

FIG. 14 is a diagram for describing a relationship between a coding unit and transformation units, according to various embodiments of the present disclosure.

FIG. 15 illustrates a plurality of pieces of encoding information according to an embodiment of the present disclosure.

FIG. 16 is a diagram of coding units according to various embodiments of the present disclosure.

FIGS. 17, 18, and 19 are diagrams for describing a relationship between coding units, prediction units, and transformation units, according to various embodiments of the present disclosure.

FIG. 20 is a diagram for describing a relationship between a coding unit, a prediction unit, and a transformation unit, according to encoding mode information of Table 1.

FIG. 21 is a diagram of a physical structure of a disc in which a program is stored, according to various embodiments.

FIG. 22 is a diagram of a disc drive for recording and reading a program by using the disc.

FIG. 23 is a diagram of an overall structure of a content supply system for providing a content distribution service.

FIGS. 24 and 25 are diagrams respectively of an external structure and an internal structure of a mobile phone to which a video encoding method and a video decoding method of the present disclosure are applied, according to various embodiments.

FIG. 26 is a diagram of a digital broadcasting system to which a communication system according to the present disclosure is applied.

FIG. 27 illustrates a network structure of a cloud computing system using a video encoding apparatus and a video decoding apparatus according to various embodiments of the present disclosure.

BEST MODE

According to an aspect of the present disclosure, there is provided an inter-layer video decoding method including obtaining, from a bitstream, depth refinement information indicating whether a disparity vector of a current block of a second layer is obtainable by using a depth image of a first layer; and if the depth refinement information indicates that the depth image of the first layer is available, determining the disparity vector of the current block of the second layer, wherein the disparity vector includes a predetermined second component value and a first component value that is determined by using a base disparity vector and the depth image of the first layer.

The determining of the disparity vector of the current block may include determining the disparity vector of the current block of the second layer, wherein the disparity vector includes a predetermined vertical component value and a horizontal component value that is determined by using the base disparity vector and the depth image of the first layer.

The predetermined second component value may be 0.

The predetermined second component value may be a vertical component value of the base disparity vector.

If the depth refinement information indicates that the depth image of the first layer is not available, the determining of the disparity vector of the current block may include determining the base disparity vector as the disparity vector of the current block.

If the depth refinement information indicates that the depth image of the first layer is not available, the determining of the disparity vector of the current block may include determining the disparity vector of the current block which includes the first component value determined by using the base disparity vector and the predetermined second component value.

The determining of the disparity vector of the current block may further include determining the base disparity vector by using a neighboring block of the current block of the second layer.

When the base disparity vector cannot be determined by using a neighboring block of the current block of the second layer, the determining of the disparity vector of the current block may further include determining the base disparity vector as (0, 0).

The determining of the disparity vector of the current block may include obtaining depth values of a corner of a reference block of the depth image of the first layer, wherein the depth values correspond to the base disparity vector; and determining the disparity vector of the current block of the second layer by using at least one of the obtained depth values of the corner.

The inter-layer video decoding method may further include obtaining, from the bitstream, mode information indicating a coding mode of the current block of the second layer, and the determining of the disparity vector of the current block may include, when the coding mode of the current block is a first mode, determining the disparity vector of the current block which includes the predetermined second component value and the first component value that is determined by using the base disparity vector and the depth image of the first layer, and when the coding mode of the current block is a second mode, determining the base disparity vector as the disparity vector of the current block.

According to another aspect of the present disclosure, there is provided an inter-layer video decoding apparatus including an obtainer configured to obtain, from a bitstream, depth refinement information indicating whether a disparity vector of a current block of a second layer is obtainable by using a depth image of a first layer; and a disparity vector determiner configured to, if the depth refinement information indicates that the depth image of the first layer is available, determine the disparity vector of the current block of the second layer, wherein the disparity vector includes a predetermined second component value and a first component value that is determined by using a base disparity vector and the depth image of the first layer.

According to another aspect of the present disclosure, there is provided an inter-layer video encoding method including determining a disparity vector of a current block of a second layer, wherein the disparity vector includes a predetermined second component value and a first component value that is determined by using a base disparity vector and a depth image of a first layer; and adding, to a bitstream, depth refinement information indicating whether the disparity vector of the current block of the second layer is obtainable by using the depth image of the first layer.

The determining of the disparity vector of the current block may include determining the disparity vector of the current block of the second layer, wherein the disparity vector includes a predetermined vertical component value and a horizontal component value that is determined by using the base disparity vector and the depth image of the first layer.

According to another aspect of the present disclosure, there is provided an inter-layer video encoding apparatus including a disparity vector determiner configured to determine a disparity vector of a current block of a second layer, wherein the disparity vector includes a predetermined second component value and a first component value that is determined by using a base disparity vector and a depth image of a first layer; and a bitstream generator configured to add, to a bitstream, depth refinement information indicating whether the disparity vector of the current block of the second layer is obtainable by using the depth image of the first layer.

According to another aspect of the present disclosure, there is provided a computer-readable recording medium having recorded thereon a program for executing the inter-layer video decoding method.

MODE OF THE INVENTION

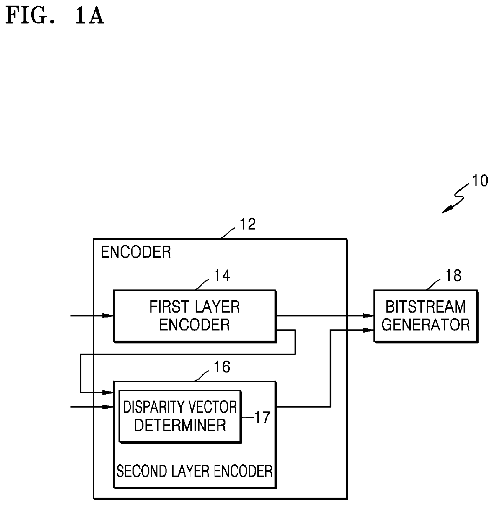

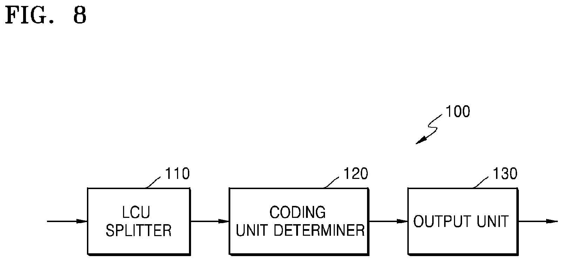

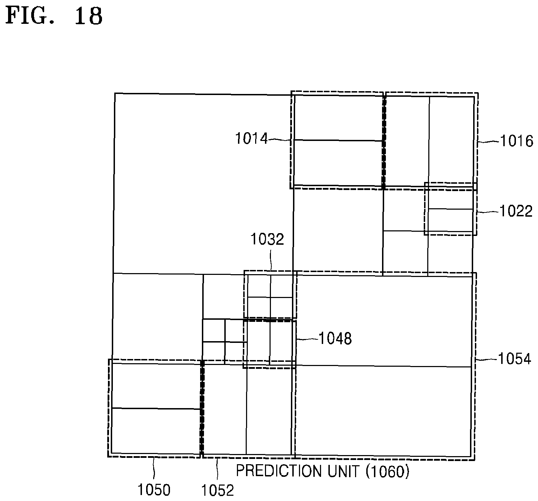

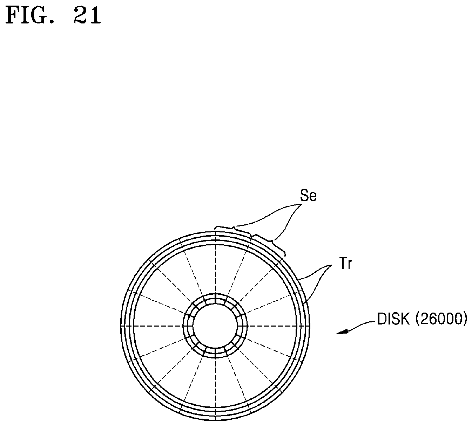

Hereinafter, with reference to FIGS. 1A through 7, an inter-layer video encoding technique and an inter-layer video decoding technique for determining a disparity vector by using a reference layer depth map will be described. Also, with reference to FIGS. 8 through 20, a video encoding technique and a video decoding technique, which are based on coding units having a tree structure, according to embodiments applicable to the inter-layer video encoding and decoding techniques will be described. Also, with reference to FIGS. 21 through 27, embodiments to which the video encoding method and the video decoding method are applicable will be described.

Hereinafter, an 'image' may denote a still image or a moving image of a video, or a video itself.

Hereinafter, a 'sample' denotes data that is assigned to a sampling location of an image and is to be processed. For example, pixel values or residual of a block in an image of a spatial domain may be samples.

Hereinafter, a 'current block' may denote a block of an image to be encoded or decoded.

Hereinafter, a 'neighboring block' denotes at least one encoded or decoded block adjacent to the current block. For example, a neighboring block may be located at the top, upper right, left, or upper left of a current block. Also, a neighboring block may be a spatially-neighboring block or a temporally-neighboring block. For example, a temporally-neighboring block may include a block of a reference picture, which is co-located as a current block, or a neighboring block of the co-located block.

Hereinafter, a "layer image" denotes specific-view images or specific-type images. In a multiview video, one layer image indicates color images or depth images which are input at a specific view. For example, in a three-dimensional (3D) video, each of a left-view texture image, a right-view texture image, and a depth image forms one layer image. That is, the left-view texture image may form a first layer image, the right-view texture image may form a second layer image, and the depth image may form a third layer image.

First, with reference to FIGS. 1A through 7B, inter-layer video decoding and encoding apparatuses and methods for performing subblock-based prediction according to an embodiment will be described.

FIG. 1A is a block diagram of an inter-layer video encoding apparatus 10 according to an embodiment.

Referring to FIG. 1A, the inter-layer video encoding apparatus 10 may include an encoder 12 and a bitstream generator 18. The encoder 12 may include a first layer encoder 14 and a second layer encoder 16. The second layer encoder 16 may include a disparity vector determiner 17.

The inter-layer video encoding apparatus 10 according to an embodiment may classify a plurality of image sequences according to layers and may encode each of the image sequences according to a scalable video coding scheme, and may output separate streams including data encoded according to layers. The inter-layer video encoding apparatus 10 may encode a first layer image sequence and a second layer image sequence to different layers.

The first layer encoder 14 may encode first layer images and may output a first layer stream including encoding data of the first layer images.

The second layer encoder 16 may encode second layer images and may output a second layer stream including encoding data of the second layer images.

For example, according to a scalable video coding method based on spatial scalability, low resolution images may be encoded as first layer images, and high resolution images may be encoded as second layer images. An encoding result of the first layer images may be output as a first layer stream, and an encoding result of the second layer images may be output as a second layer stream.

The inter-layer video encoding apparatus 10 according to an embodiment may express and encode the first layer stream and the second layer stream as one bitstream through a multiplexer.

As another example, a multiview video may be encoded according to a scalable video coding scheme. Left view images may be encoded as first layer images and right view images may be encoded as second layer images. Alternatively, central view images, left view images, and right view images may be each encoded, wherein the central view images are encoded as first layer images, the left view images are encoded as second layer images, and the right view images are encoded as third layer images. Alternatively, a central view texture image, a central view depth image, a left view texture image, a left view depth image, a right view texture image, and a right view depth image may be respectively encoded as a first layer image, a second layer image, a third layer image, a fourth layer image, a fifth layer image, and a sixth layer image. As another example, a central view texture image, a central view depth image, a left view depth image, a left view texture image, a right view depth image, and a right view texture image may be respectively encoded as a first layer image, a second layer image, a third layer image, a fourth layer image, a fifth layer image, and a sixth layer image.

As another example, a scalable video coding method may be performed according to temporal hierarchical prediction based on temporal scalability. A first layer stream including encoding information generated by encoding base frame rate images may be output. Temporal levels may be classified according to frame rates and each temporal level may be encoded according to layers. A second layer stream including encoding information of a high frame rate may be output by further encoding higher frame rate images by referring to the base frame rate images.

Also, scalable video coding may be performed on a first layer and a plurality of extension layers (a second layer, a third layer, ..., a K-th layer). When there are at least three extension layers, first layer images and K-th layer images may be encoded. Accordingly, an encoding result of the first layer images may be output as a first layer stream, and encoding results of the first, second, ..., K-th layer images may be respectively output as first, second, ..., K-th layer streams.

The inter-layer video encoding apparatus 10 according to an embodiment may perform inter prediction in which images of a single layer are referenced in order to predict a current image. By performing inter prediction, a motion vector indicating motion information between a current image and a reference image and a residual between the current image and the reference image may be predicted from a region corresponding to a first layer (base layer).

High correlation is present between images of each of layers that construct a multiview image. For example, correlation may be present between a texture image and a depth image of a same view since an image at a same time and a same view is expressed as a color and a depth. Also, correlation may be present between a texture image and a depth image which are input at different moments of time and represent different views. Therefore, a multiview image may have various types of available reference pictures, and inter prediction may be performed thereon in various manners.

That is, it is not limited to a case in which inter prediction is performed only in a temporal direction when the inter prediction is performed on a single-view image according to the related art, thus, when the inter prediction is performed on the multiview image, the inter prediction may be performed in a view direction between different-view layers. Also, since correlation is present between a texture image and a depth image that correspond to each other, the texture image and the depth image may be inter predicted by referring to each other. In general, the texture image includes a large amount of information, the depth image may be inter predicted by referring to the texture image.

Also, the inter-layer video encoding apparatus 10 may perform inter-layer prediction in which second layer images are predicted by referring to first layer images.

Also, when the inter-layer video encoding apparatus 10 according to an embodiment allows at least three layers, i.e., first, second, and third layers, inter-layer prediction between a first layer image and a third layer image, and inter-layer prediction between a second layer image and a third layer image may be performed according to a multilayer prediction structure.

In interlayer prediction, when a layer of a current image and a layer of a reference image are different from each other in their views, a disparity vector between the current image and the reference image of the layer different from that of the current image may be derived, and a residual component that is a difference component between the current image and a prediction image generated by using the reference image of the different layer may be generated.

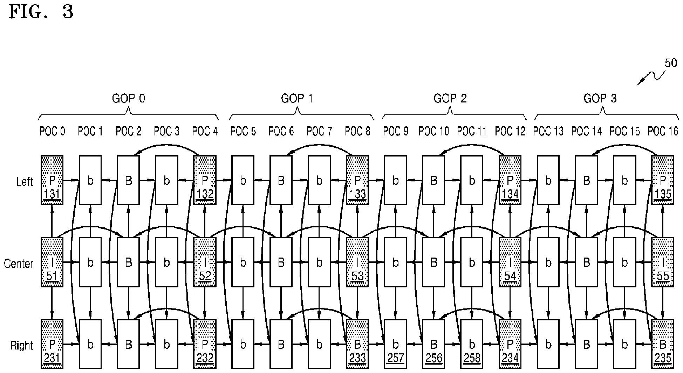

An inter-layer prediction structure will be described later with reference to FIG. 3.

The inter-layer video encoding apparatus 10 according to various embodiments may perform encoding according to blocks of each image of a video, according to layers. A block may have a square shape, a rectangular shape, or an arbitrary geometrical shape, and is not limited to a data unit having a predetermined size. The block may be a maximum coding unit, a coding unit, a prediction unit, or a transformation unit, among coding units according to a tree structure. A largest coding unit (LCU) including coding units of a tree structure may be called differently, such as a coding tree unit, a coding block tree, a block tree, a root block tree, a coding tree, a coding root, or a tree trunk. Video encoding and decoding methods based on coding units according to a tree structure will be described later with reference to FIGS. 8 through 20.

Inter prediction and inter-layer prediction may be performed based on a data unit, such as a coding unit, a prediction unit, or a transformation unit.

The first layer encoder 14 according to an embodiment may generate symbol data by performing source coding operations including inter prediction or intra prediction on first layer images. Symbol data indicates a value of each encoding parameter and a sample value of a residual.

For example, the encoder 12 may generate symbol data by performing inter or intra prediction, transformation, and quantization on samples on samples of a data unit of first layer images, and may generate a first layer stream by performing entropy encoding on the symbol data.

The second layer encoder 16 may encode second layer images based on coding units of a tree structure. The second layer encoder 16 may generate symbol data by performing inter/intra prediction, transformation, and quantization on samples of a coding unit of second layer images, and may generate a second layer stream by performing entropy encoding on the symbol data.

The second layer encoder 16 according to an embodiment may perform inter-layer prediction in which a second layer image is predicted by using prediction information of a first layer image. In order to encode a second layer original image from a second layer image sequence through an inter-layer prediction structure, the second layer encoder 16 may determine prediction information of a second layer current image by using prediction information of a first layer reconstructed image, and may encode a prediction error between the second layer original image and a second layer prediction image by generating the second layer prediction image based on the determined prediction information.

In addition, when the inter-layer video encoding apparatus 10 described above encodes a multiview video, a first layer image that is encoded may be a depth image corresponding to a first view texture image, and a second layer image may be a second view texture image. Since the multiview image is obtained at the same time, similarity between images according to views is high.

However, since characteristics of image-capturing angles, lightings, and image-capturing devices (a camera, a lens, etc.) are different according to views, a multiview image may have a disparity representing a positional difference of an object in images that are input at the same time from different views. Accordingly, encoding efficiency may be increased by performing disparity compensated prediction in which such a disparity is indicated as a disparity vector, and a region that is most similar to a block to be currently encoded is found and encoded from a different view image by using the disparity vector.

The inter-layer video encoding apparatus 10 may determine the disparity vector for the inter-layer prediction, and may transmit separate information about the determined disparity vector to a decoding apparatus via a bitstream.

Alternatively, the inter-layer video encoding apparatus 10 may allow the disparity vector to be obtained from a plurality of pieces of other coding information so as to decrease an amount of data to be transmitted in each prediction unit.

For example, a neighboring block disparity vector (NBDV) of the disparity vector may be obtained from neighboring blocks of a block that is currently reconstructed. Alternatively, if the disparity vector is not obtained from the neighboring blocks, the NBDV may be set as (0,0) vector.

In addition, a depth-oriented NBDV (DoNBDV) of the disparity vector may be determined by using a depth image having more specific information regarding the disparity. The depth image may store information regarding a distance between a camera and a target object with respect to a predetermined pixel of a texture image of a corresponding layer. Therefore, the depth image may be used in providing a method of providing a multiview image by synthesizing a virtual view with an image at small views in a free view display using multiview video coding.

For example, a disparity vector that is refined by using a depth value of a depth image corresponding to a base disparity vector that is set based on the disparity vector obtained from the neighboring blocks may be determined. As another example, the disparity vector that is refined by using a largest value among four corner values in a depth block including the depth value of the depth image corresponding to the base disparity vector may be determined.

In addition, a plurality of cameras corresponding to different views providing a multiview image may be first-dimensionally placed. For example, the plurality of cameras may be placed in parallel in a horizontal direction. In this regard, different-views images captured by the plurality of cameras that are placed in parallel in the horizontal direction may have the least disparity with respect to a vertical direction, thus, a depth image may include only disparity information regarding a horizontal component. Therefore, when a refined disparity vector is determined, a value of a vertical component may be set as 0, so that accuracy in determining the disparity vector may be increased and coding efficiency may be increased.

In more detail, the disparity vector determiner 17 included in the second layer encoder 16 may determine a disparity vector of a current block of the second layer.

The disparity vector determiner 17 may obtain a base disparity vector from neighboring blocks of the current block, and if a depth image is available, the disparity vector determiner 17 may determine the disparity vector of the current block, wherein the disparity vector is refined by using depth values of a depth image of the first layer which are indicated by the base disparity vector.

That is, the disparity vector determiner 17 may determine the disparity vector of the current block by using the base disparity vector obtained from the neighboring blocks, the depth image of the first layer, and a camera parameter. In this regard, the second layer image to be encoded may be a second view video, and the first layer image may be a depth image corresponding to a first view video, which are obtained at the same time.

In more detail, the disparity vector determiner 17 may determine a first component value of the disparity vector of the current block by using the base disparity vector obtained from the neighboring blocks and the depth image of the first layer. For example, when the plurality of cameras are placed in parallel in a horizontal direction, the first component value may be a horizontal component value. The disparity vector determiner 17 may determine a second component value as a predetermined value. The second component value may be a vertical component value. Alternatively, the second component value that is set as the predetermined value may be a component value that is not related to depth values of the depth image of the first layer. For example, the predetermined value may be 0.

Alternatively, the disparity vector determiner 17 may determine the first component value of the disparity vector of the current block by using the base disparity vector and the depth image of the first layer, and may determine the second component value of the disparity vector of the current block by using a second component value of the base disparity vector. For example, the disparity vector determiner 17 may determine a horizontal component value of the disparity vector of the current block by using the base disparity vector and the depth image of the first layer, and may determine a vertical component value of the base disparity vector as a vertical component value of the disparity vector of the current block.

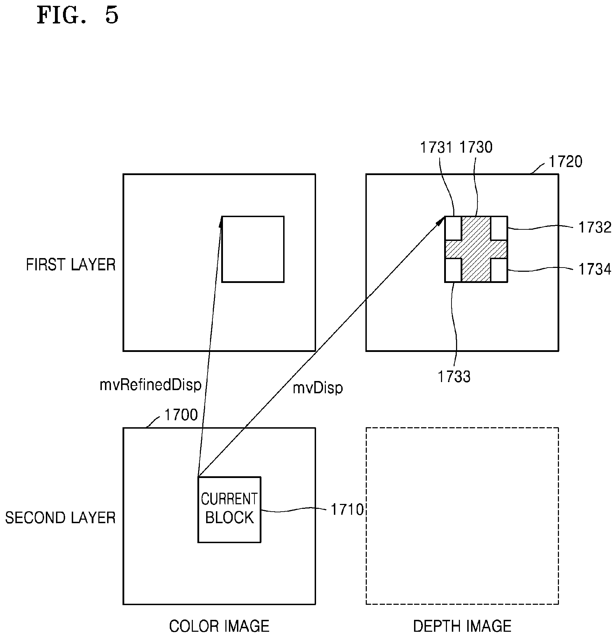

In this regard, a specific method of determining a disparity vector of a current block, the disparity vector being refined by using a depth image, will be described below with reference to FIG. 5.

To apply a same disparity vector determining method to various coding modes each using a disparity vector may deteriorate coding efficiency. For example, the coding modes each using a disparity vector may include an inter-view motion vector mode, a disparity information motion vector mode, a view synthesis prediction mode, an advanced residual prediction mode, a depth-based block partitioning mode, or the like. In addition, the coding modes each using a disparity vector may further include a shift inter-view motion vector mode in which a motion vector is shifted based on a block size in the inter-view motion vector mode, and a shift disparity information motion vector mode in which a disparity vector is shifted based on a block size in the disparity information motion vector mode.

The inter-view motion vector mode indicates an inter-prediction technique of referring to motion information existing in a corresponding block in a view direction, as motion information of a current block. In the inter-view motion vector mode, a disparity vector may be used to search for the corresponding block in a view direction so as to predict the motion information.

The disparity information motion vector mode is inter-prediction in which motion compensation in a view direction is performed by using, as motion information, a disparity vector indicating a reference block in the view direction, and in this regard, the disparity vector may be used as a motion vector indicating the reference block.

The view synthesis prediction mode is inter-prediction in which reference blocks in a view direction which correspond to several subblocks in a current block are referred to, and in this regard, a disparity vector may be used to search for the reference blocks in the view direction.

The advanced residual prediction mode is inter-prediction in which residual signal information of a corresponding block in a view direction, the corresponding block corresponding to a current block, is used, and in this regard, a disparity vector may be used to search for the corresponding block corresponding to the current block.

The depth-based block partitioning mode is inter-prediction in which partitioned areas of a prediction unit of a current block are determined by referring to information of a depth block corresponding to the current block, and in this regard, a disparity vector may be used to search for the depth block corresponding to the current block.

According to the various coding modes each using a disparity vector, the disparity vector determiner 17 may determine a disparity vector obtained from neighboring blocks, as a disparity vector of a current block, and may determine a disparity vector refined by using a depth image, as the disparity vector of the current block.

In more detail, the disparity vector determiner 17 may pre-set a disparity vector determining method according to each of the coding modes. For example, the disparity vector determiner 17 may pre-set that, when the disparity vector determiner 17 uses the inter-view motion vector mode, the disparity information motion vector mode, the view synthesis prediction mode, and the depth-based block partitioning mode, the disparity vector determiner 17 uses the disparity vector refined by using the depth image, and when the disparity vector determiner 17 uses the advanced residual prediction mode, the disparity vector determiner 17 uses the disparity vector obtained from the neighboring blocks. When a coding mode is determined, the disparity vector determiner 17 may determine a disparity vector according to the disparity vector determining method that is pre-set according to each of the coding modes.

In addition, according to the coding modes, the disparity vector determiner 17 may determine a disparity vector of which second component is set as a predetermined value, or may determine a disparity vector of which second component is set as a second component of the base disparity vector. For example, a value of the second component may be a vertical component value, and the predetermined value may be 0.

For a coding mode in which restriction of a disparity vector is more efficient, the disparity vector determiner 17 may restrict a vertical component value of the disparity vector as a predetermined value such as 0, so that the disparity vector determiner 17 may further accurately predict the disparity vector and may increase the coding efficiency.

The second layer encoder 16 may encode the current block by using the determined disparity vector of the current block.

The bitstream generator 18 may generate a bitstream including an encoded video and a plurality of pieces of information for decoding, and may transmit the generated bitstream to the decoding apparatus.

The bitstream generator 18 may add, to the bitstream, depth refinement information depth_refinement_flag indicating whether the disparity vector of the current block of the second layer is obtainable by using the depth image of the first layer. In addition, the bitstream generator 18 may add, to the bitstream, a plurality of pieces of mode information each indicating use or non-use of the coding mode using a disparity vector. For example, the depth refinement information depth_refinement_flag may be included in a sequence parameter set (SPS) that is a group of parameters applied in a sequence unit.

The inter-layer video encoding apparatus 10 may perform entropy encoding by transforming and quantizing an error, i.e., a residual component according to inter-layer prediction, between a sample value of a second layer prediction block and a sample value of a second layer original block, by using a first layer reconstruction image. Also, entropy encoding may also be performed on an error between two prediction values.

As described above, the inter-layer video encoding apparatus 10 may encode a current layer image sequence by referencing first layer reconstruction images through an inter-layer prediction structure. However, the inter-layer video encoding apparatus 10 according to an embodiment may encode a second layer image sequence according to a single layer prediction structure without having to reference other layer samples. Accordingly, it should not be limitedly construed that the inter-layer video encoding apparatus 10 only performs inter prediction of an inter-layer prediction structure in order to encode a second layer image sequence.

The inter-layer video encoding apparatus 10 according to an embodiment of the present disclosure may include a central processor (not shown) that generally controls the first layer encoder 14, the second layer encoder 16, and the bitstream generator 18. Alternatively, the first layer encoder 14, the second layer encoder 16, and the bitstream generator 18 may be operated by individual processors (not shown), and the inter-layer video encoding apparatus 10 may be operated as the individual processors systematically operate. Alternatively, the first layer encoder 14, the second layer encoder 16, and the bitstream generator 18 may be controlled according to control of an external processor (not shown) of the inter-layer video encoding apparatus 10.

The inter-layer video encoding apparatus 10 may include at least one data storage unit (not shown) in which input and output data of the first layer encoder 14, the second layer encoder 16, and the bitstream generator 18 is stored. The inter-layer video encoding apparatus 10 may include a memory controller (not shown) that manages data input and output of the data storage unit (not shown).

In order to output a video encoding result, the inter-layer video encoding apparatus 10 may operate in cooperation with an internal video encoding processor installed therein or an external video encoding processor so as to perform video encoding operations including transformation. The internal video encoding processor of the inter-layer video encoding apparatus 10 may perform the video encoding operations as a separate processor. Also, basic video encoding operations may be realized as the inter-layer video encoding apparatus 10, a central processing apparatus, or a graphic processing apparatus includes a video encoding processing module.

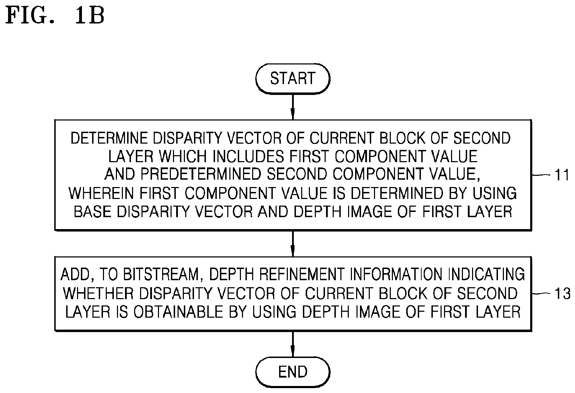

Hereinafter, operations of the inter-layer video encoding apparatus 10 which are for inter-layer prediction are described in detail with reference to FIG. 1B.

FIG. 1B is a flowchart of an inter-layer video encoding method according to an embodiment.

In operation 11, the inter-layer video encoding apparatus 10 may determine a disparity vector of a current block of a second layer which includes a first component value and a predetermined second component value, wherein the first component value is determined by using a base disparity vector and a depth image of a first layer.

The inter-layer video encoding apparatus 10 may obtain the disparity vector of the current block from neighboring blocks of the current block, or may obtain the disparity vector of the current block by using the depth image.

The disparity vector obtained from the neighboring blocks of the current block may become the base disparity vector.

In order to obtain the disparity vector from the neighboring blocks of the current block of the second layer, the inter-layer video encoding apparatus 10 may search for a neighboring block candidate having a motion vector in an inter-layer direction (a view direction different from a view corresponding to the current block) from among spatial neighboring block candidates of the current block and temporal neighboring block candidates at a co-located position. In this regard, the motion vector in the inter-layer direction of the neighboring block candidate may mean a disparity vector of the neighboring block candidate.

When the neighboring block candidate of the current block has the motion vector in the inter-layer direction, the inter-layer video encoding apparatus 10 may determine the motion vector in the inter-layer direction of the neighboring block candidate as the base disparity vector of the current block.

In addition, if the neighboring block candidate having the motion vector in the inter-layer direction is not found, the inter-layer video encoding apparatus 10 may search for, from among the neighboring block candidates, a neighboring block candidate having disparity vector information. For example, if the neighboring block candidate is obtained by performing inter-layer motion prediction and compensation, the neighboring block candidate has the disparity vector information, thus, the inter-layer video encoding apparatus 10 may search for, from among the neighboring block candidates, the neighboring block candidate to which inter-layer motion compensation has been performed.

The inter-layer video encoding apparatus 10 may determine the base disparity vector of the current block by using the disparity vector information of the neighboring block candidate.

If the inter-layer video encoding apparatus 10 does not find the neighboring block candidate to which inter-layer motion compensation has been performed, the inter-layer video encoding apparatus 10 may determine that a disparity vector cannot be predicted from the neighboring block candidates, and may determine the base disparity vector as a (0, 0) vector. The inter-layer video encoding apparatus 10 may determine a disparity vector of the current block by refining a base disparity vector that is obtained from the neighboring block candidate, by using a depth value of the depth image.

In more detail, when the depth image is available, the inter-layer video encoding apparatus 10 may determine the disparity vector of the current block which is refined by using the base disparity vector obtained from the neighboring block candidate and depth values of the depth image. In this regard, the depth image may be a depth image of the first layer which is indicated by the base disparity vector obtained from the neighboring block candidate of the current block of the second layer. A second layer image that is encoded may be a second view video, and a first layer image may be the depth image corresponding to a first view video, wherein the second layer image and the first layer image are obtained at the same time.

The inter-layer video encoding apparatus 10 may determine a first component value of the disparity vector of the current block by using the base disparity vector obtained from the neighboring blocks and the depth image of the first layer. For example, when a plurality of cameras are placed in parallel in a horizontal direction, the first component value may be a horizontal component value. The inter-layer video encoding apparatus 10 may determine a second component value as a predetermined value. The second component value may be a vertical component value. Alternatively, the second component value that is set as the vertical component value may be a component value that is not related to the depth values of the depth image of the first layer. For example, the predetermined value may be 0.

Alternatively, the inter-layer video encoding apparatus 10 may determine the first component value of the disparity vector of the current block by using the base disparity vector and the depth image of the first layer, and may determine the second component value of the disparity vector of the current block by using a second component value of the base disparity vector. For example, the inter-layer video encoding apparatus 10 may determine the horizontal component value of the disparity vector of the current block by using the base disparity vector and the depth image of the first layer, and may determine a vertical component value of the base disparity vector as a vertical component value of the disparity vector of the current block.

In this regard, a specific method of determining a disparity vector of a current block, the disparity vector being refined by using a depth image, will be described below with reference to FIG. 5.

To apply a same disparity vector determining method to various coding modes each using a disparity vector may deteriorate coding efficiency. Therefore, according to the various coding modes each using a disparity vector, the inter-layer video encoding apparatus 10 may determine a disparity vector obtained from neighboring blocks, as a disparity vector of a current block, and may determine a disparity vector refined by using a depth image, as the disparity vector of the current block.

In addition, according to the coding modes, the inter-layer video encoding apparatus 10 may determine a disparity vector of which second component is set as a predetermined value, and may determine a disparity vector of which second component is set as a second component of the base disparity vector. For example, a value of the second component may be a vertical component value, and the predetermined value may be 0.

For a coding mode in which restriction of a disparity vector is more efficient, the inter-layer video encoding apparatus 10 may restrict a vertical component value of the disparity vector as a predetermined value such as 0, so that the inter-layer video encoding apparatus 10 may further accurately predict the disparity vector and may increase the coding efficiency.

The inter-layer video encoding apparatus 10 may encode the current block by using the determined disparity vector of the current block.

In operation 13, the inter-layer video encoding apparatus 10 may add, to a bitstream, depth refinement information indicating whether the disparity vector of the current block of the second layer is obtainable by using the depth image of the first layer.

In addition, the inter-layer video encoding apparatus 10 may add, to the bitstream, a plurality of pieces of mode information each indicating use or non-use of the coding mode using a disparity vector.

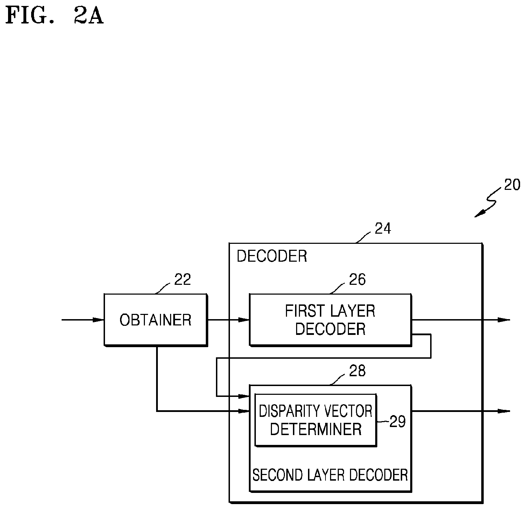

FIG. 2A is a block diagram of an inter-layer video decoding apparatus according to an embodiment.

Referring to FIG. 2A, an inter-layer video decoding apparatus 20 may include an obtainer 22 and a decoder 24. The decoder 24 may include a first layer decoder 26 and a second layer decoder 28. The second layer decoder 28 may include a disparity vector determiner 29.

The inter-layer video decoding apparatus 20 according to an embodiment may receive a bitstream of an encoded video according to layers.

The inter-layer video decoding apparatus 20 may receive bitstreams according to layers, via a scalable encoding scheme. The number of layers of bitstreams received by the inter-layer video decoding apparatus 20 is not limited. However, for convenience of description, an embodiment in which the first layer decoder 26 of the inter-layer video decoding apparatus 20 receives and decodes a first layer stream and the second layer decoder 28 receives and decodes a second layer stream will be described.

For example, the inter-layer video decoding apparatus 20 based on spatial scalability may receive a stream in which image sequences having different resolutions are encoded in different layers. A first layer stream may be decoded to reconstruct an image sequence having low resolution and a second layer stream may be decoded to reconstruct an image sequence having high resolution.

As another example, a multiview video may be decoded according to a scalable video coding scheme. When a stereoscopic video stream is received in a plurality of layers, a first layer stream may be decoded to reconstruct left view images. A second layer stream may be further decoded to reconstruct right view images.

Alternatively, when a multiview video stream is received in a plurality of layers, a first layer stream may be decoded to reconstruct central view images. A second layer stream may be further decoded to reconstruct left view images. A third layer stream may be further decoded to reconstruct right view images.

As another example, a scalable video coding method based on temporal scalability may be performed. A first layer stream may be decoded to reconstruct base frame rate images. A second layer stream may be further decoded to reconstruct high frame rate images.

Also, when there are at least three second layers, first layer images may be reconstructed from a first layer stream, and when a second layer stream is further decoded by referring to first layer reconstruction images, second layer images may be further reconstructed. When K-th layer stream is further decoded by referring to second layer reconstruction images, K-th layer images may be further reconstructed.

The inter-layer video decoding apparatus 20 may obtain encoded data of first layer images and second layer images from a first layer stream and a second layer stream, and in addition, may further obtain a motion vector generated via inter prediction and prediction information generated via inter-layer prediction.

For example, the inter-layer video decoding apparatus 20 may decode inter-predicted data per layer, and may decode inter-layer predicted data between a plurality of layers. Reconstruction may be performed through motion compensation and inter-layer video decoding based on a coding unit or a prediction unit.

Images may be reconstructed by performing motion compensation for a current image by referencing reconstruction images predicted via inter prediction of a same layer, with respect to each layer stream. Motion compensation is an operation in which a reconstruction image of a current image is reconstructed by synthesizing a reference image determined by using a motion vector of the current image and a residual of the current image.

Also, the inter-layer video decoding apparatus 20 may perform inter-layer video decoding by referring to prediction information of first layer images so as to decode a second layer image predicted via inter-layer prediction. Inter-layer video decoding is an operation in which prediction information of a current image is reconstructed by using prediction information of a reference block of a different layer so as to determine the prediction information of the current image.

The inter-layer video decoding apparatus 20 according to an embodiment may perform inter-layer video decoding for reconstructing third layer images predicted by using second layer images. An inter-layer prediction structure will be described later with reference to FIG. 3.

However, the second layer decoder 28 according to an embodiment may decode a second layer stream without having to reference a first layer image sequence. Accordingly, it should not be limitedly construed that the second layer decoder 28 performs inter-layer prediction to decode a second layer image sequence.

The inter-layer video decoding apparatus 20 performs decoding according to blocks of each image of a video. A block may be, from among coding units according to a tree structure, a largest coding unit, a coding unit, a prediction unit, or a transformation unit.

The obtainer 22 may receive a bitstream and may obtain, from the received bitstream, an encoded video and a plurality of pieces of information required in decoding.

For example, the obtainer 22 may obtain, from the bitstream, depth refinement information depth_refinement_flag indicating whether the disparity vector of the current block of the second layer is obtainable by using the depth image of the first layer. In addition, the obtainer 22 may obtain, from the bitstream, a plurality of pieces of mode information each indicating use or non-use of the coding mode using a disparity vector.

The first layer decoder 26 may decode a first layer image by using parsed encoding symbols of the first layer image. When the inter-layer video decoding apparatus 20 receives streams encoded based on coding units of a tree structure, the first layer decoder 26 may perform decoding based on the coding units of the tree structure, according to a largest coding unit of a first layer stream.

The first layer decoder 26 may obtain encoding information and encoded data by performing entropy decoding per largest coding unit. The first layer decoder 26 may reconstruct a residual by performing inverse quantization and inverse transformation on encoded data obtained from a stream. The first layer decoder 26 according to another embodiment may directly receive a bitstream of quantized transformation coefficients. Residual components of images may be reconstructed by performing inverse quantization and inverse transformation on quantized transformation coefficients.

The first layer decoder 26 may determine a prediction image via motion compensation between same layer images, and reconstruct first layer images by combining the prediction image and a residual.

According to an inter-layer prediction structure, the second layer decoder 28 may generate a second layer prediction image by using samples of a first layer reconstruction image. The second layer decoder 28 may obtain a prediction error according to inter-layer prediction by decoding a second layer stream. The second layer decoder 28 may generate a second layer reconstruction image by combining a second layer prediction image and the prediction error.

The second layer decoder 28 may determine a second layer prediction image by using a first layer reconstruction image decoded by the first layer decoder 26. According to an inter-layer prediction structure, the second layer decoder 28 may determine a block of a first layer image, which is to be referenced by a coding unit or a prediction unit, of a second layer image. For example, a reconstruction block of a first layer image, which is located correspondingly to a location of a current block in a second layer image, may be determined. The second layer decoder 28 may determine a second layer prediction block by using a first layer reconstruction block corresponding to a second layer block. The second layer decoder 28 may determine the second layer prediction block by using the first layer reconstruction block co-located with the second layer block.

The second layer decoder 28 may use a second layer prediction block determined by using a first layer reconstruction block according to an inter-layer prediction structure, as a reference image for inter-layer prediction of a second layer original block. In this case, the second layer decoder 28 may reconstruct a second layer block by synthesizing a sample value of a second layer prediction block determined by using a first layer reconstruction image and a residual component according to inter-layer prediction.

Meanwhile, when the inter-layer video decoding apparatus 20 described above decodes a multiview video, the second layer image that is decoded may be a second view texture image, and the first layer image may be the depth image corresponding to a first view texture image.

The second layer decoder 28 may include the disparity vector determiner 29.

The disparity vector determiner 29 may determine whether the depth image of the first layer is available, by using the depth refinement information depth_refinement_flag obtained from the bitstream. The depth refinement information may be information indicating whether the disparity vector of the current block of the second layer is obtainable by using the depth image of the first layer.

For example, if the depth refinement information depth_refinement_flag is 1, the disparity vector determiner 29 may obtain the disparity vector of the current block which is refined by using the depth image of the first layer. If the depth refinement information depth_refinement_flag is 0, the disparity vector determiner 29 may determine that the depth image of the first layer is not available, and may obtain a disparity vector obtained from neighboring blocks as a disparity vector of the current block.

The disparity vector determiner 29 may obtain a base disparity vector of the current block by searching for a neighboring block candidate having a motion vector in an inter-layer direction from among spatial neighboring block candidates of the current block and temporal neighboring block candidates at a co-located position.

In more detail, the disparity vector determiner 29 may obtain the motion vector in the inter-layer direction of the neighboring block candidate of the current block or disparity vector information of the neighboring block candidate and thus may determine the base disparity vector of the current block. Alternatively, if the disparity vector determiner 29 cannot obtain a disparity vector from the neighboring block candidates, the disparity vector determiner 29 may determine the base disparity vector as a (0, 0) vector.

When the depth image of the first layer is available, the disparity vector determiner 29 may set, as the base disparity vector, a disparity vector obtained from the neighboring block candidate, and may determine a disparity vector refined by using a depth value of the depth image corresponding to the base disparity vector. In this regard, the disparity vector determiner 29 may set a value of one of components of the disparity vector to 0, based on a feature that a plurality of cameras corresponding to different views and providing a multiview image are first-dimensionally arrayed, so that the disparity vector determiner 29 may increase accuracy in determining the disparity vector and may increase coding efficiency.

In more detail, the disparity vector determiner 29 may determine the disparity vector of the current block by using the base disparity vector obtained from the neighboring blocks, the depth image of the first layer, and a camera parameter.

The disparity vector determiner 29 may determine a first component value of the disparity vector of the current block by using the base disparity vector obtained from the neighboring blocks and the depth image of the first layer. For example, when the plurality of cameras are placed in parallel in a horizontal direction, the first component value may be a horizontal component value. The disparity vector determiner 29 may determine a second component value as a predetermined value. The second component value may be a vertical component value. Alternatively, the second component value that is set as the predetermined value may be a component value that is not related to depth values of the depth image of the first layer. For example, the predetermined value may be 0.

In addition, the disparity vector determiner 29 may determine the first component value of the disparity vector of the current block by using the base disparity vector and the depth image of the first layer, and may determine the second component value of the disparity vector of the current block by using a second component value of the base disparity vector. For example, the disparity vector determiner 29 may determine the horizontal component value of the disparity vector of the current block by using the base disparity vector and the depth image of the first layer, and may determine a vertical component value of the base disparity vector as a vertical component value of the disparity vector of the current block.

In this regard, a specific method of determining a disparity vector of a current block, the disparity vector being refined by using a depth image, will be described below with reference to FIG. 5.

To apply a same disparity vector determining method to various coding modes each using a disparity vector may deteriorate coding efficiency. For example, the coding modes each using a disparity vector may include an inter-view motion vector mode, a disparity information motion vector mode, a view synthesis prediction mode, an advanced residual prediction mode, a depth-based block partitioning mode, or the like.

According to the various coding modes each using a disparity vector, the disparity vector determiner 29 may determine a disparity vector obtained from neighboring blocks, as a disparity vector of a current block, and may determine a disparity vector refined by using a depth image, as the disparity vector of the current block.

In addition, according to the coding modes, the disparity vector determiner 29 may determine a disparity vector of which second component is set as a predetermined value, or may determine a disparity vector of which second component is set as a second component of the base disparity vector. For example, a value of the second component may be a vertical component value, and the predetermined value may be 0.

For a coding mode in which restriction of a disparity vector is more efficient, the disparity vector determiner 29 may restrict a vertical component value of the disparity vector as a predetermined value such as 0, so that the disparity vector determiner 29 may further accurately predict the disparity vector and may increase the coding efficiency.

The second layer decoder 28 may encode the current block by using the determined disparity vector of the current block.

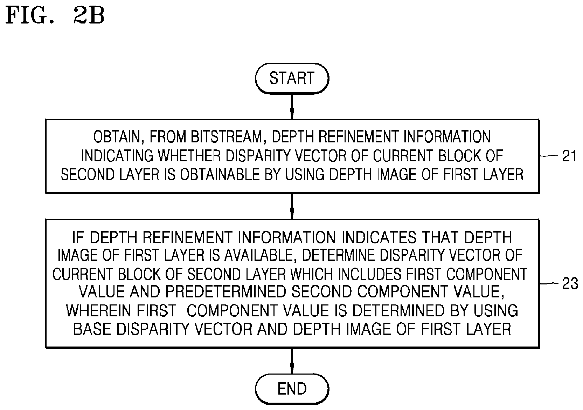

Hereinafter, operations of the inter-layer video decoding apparatus 20 which are for inter-layer prediction are described in detail with reference to FIG. 2B.

FIG. 2B is a flowchart of an inter-layer video decoding method according to an embodiment.

In operation 21, the inter-layer video decoding apparatus 20 may obtain, from a bitstream, depth refinement information indicating whether a disparity vector of a current block of a second layer is obtainable by using a depth image.

In addition, the inter-layer video decoding apparatus 20 may obtain, from the bitstream, a plurality of pieces of mode information each indicating use or non-use of a coding mode among coding modes each using a disparity vector.

In operation 23, if the depth refinement information indicates that the depth image of a first layer is available, the inter-layer video decoding apparatus 20 may determine the disparity vector of the current block of the second layer which includes a first component value and a predetermined second component value, wherein the first component value is determined by using a base disparity vector and the depth image of the first layer.

The inter-layer video decoding apparatus 20 may obtain the disparity vector of the current block from neighboring blocks of the current block, and may obtain the disparity vector of the current block by using the depth image.

The disparity vector obtained from the neighboring blocks of the current block may become the base disparity vector.

In order to obtain the disparity vector from the neighboring blocks of the current block of the second layer, the inter-layer video decoding apparatus 20 may search for a neighboring block candidate having a motion vector in an inter-layer direction from among spatial neighboring block candidates of the current block and temporal neighboring block candidates at a co-located position. In this regard, the motion vector in the inter-layer direction of the neighboring block candidate may mean a disparity vector of the neighboring block candidate.

When the neighboring block candidate of the current block has the motion vector in the inter-layer direction, the inter-layer video decoding apparatus 20 may determine the motion vector in the inter-layer direction of the neighboring block candidate as the base disparity vector of the current block.

In addition, if the neighboring block candidate having the motion vector in the inter-layer direction is not found, the inter-layer video decoding apparatus 20 may search for, from among the neighboring block candidates, a neighboring block candidate having disparity vector information. For example, if the neighboring block candidate is obtained by performing inter-layer motion prediction and compensation, the neighboring block candidate has the disparity vector information, thus, the inter-layer video decoding apparatus 20 may search for, from among the neighboring block candidates, the neighboring block candidate to which inter-layer motion compensation has been performed.

The inter-layer video decoding apparatus 20 may determine the base disparity vector of the current block by using the disparity vector information of the neighboring block candidate.

If the inter-layer video decoding apparatus 20 does not find the neighboring block candidate to which inter-layer motion compensation has been performed, the inter-layer video decoding apparatus 20 may determine that a disparity vector cannot be predicted from the neighboring block candidates, and may determine the base disparity vector as a (0, 0) vector.

The inter-layer video decoding apparatus 20 may determine the disparity vector of the current block by refining the base disparity vector that is obtained from the neighboring block candidate, by using a depth value of the depth image.

In more detail, when the depth image is available, the inter-layer video decoding apparatus 20 may determine the disparity vector of the current block which is refined by using the base disparity vector obtained from the neighboring block candidate and depth values of the depth image. In this regard, the depth image may be a depth image of the first layer which is indicated by the base disparity vector obtained from the neighboring block candidate of the current block of the second layer. A second layer image that is decoded may be a second view video, and a first layer image may be a first view video, wherein the second layer image and the first layer image are obtained at the same time.

The inter-layer video decoding apparatus 20 may determine a first component value of the disparity vector of the current block by using the base disparity vector obtained from the neighboring blocks and the depth image of the first layer. For example, when a plurality of cameras are placed in parallel in a horizontal direction, the first component value may be a horizontal component value. The inter-layer video decoding apparatus 20 may determine a second component value as a predetermined value. The second component value may be a vertical component value. Alternatively, the second component value that is set as the vertical component value may be a component value that is not related to the depth values of the depth image of the first layer. For example, the predetermined value may be 0.

Alternatively, the inter-layer video decoding apparatus 20 may determine the first component value of the disparity vector of the current block by using the base disparity vector and the depth image of the first layer, and may determine the second component value of the disparity vector of the current block by using a second component value of the base disparity vector. For example, the inter-layer video decoding apparatus 20 may determine the horizontal component value of the disparity vector of the current block by using the base disparity vector and the depth image of the first layer, and may determine a vertical component value of the base disparity vector as a vertical component value of the disparity vector of the current block.

In this regard, a specific method of determining a disparity vector of a current block, the disparity vector being refined by using a depth image, will be described below with reference to FIG. 5.

To apply a same disparity vector determining method to various coding modes each using a disparity vector may deteriorate coding efficiency. Therefore, according to the various coding modes each using a disparity vector, the inter-layer video decoding apparatus 20 may determine a disparity vector obtained from neighboring blocks, as a disparity vector of a current block, and may determine a disparity vector refined by using a depth image, as the disparity vector of the current block.

In addition, according to the coding modes, the inter-layer video decoding apparatus 20 may determine a disparity vector of which second component is set as a predetermined value, and may determine a disparity vector of which second component is set as a second component of the base disparity vector. For example, a value of the second component may be a vertical component value, and the predetermined value may be 0.

For a coding mode in which restriction of a disparity vector is more efficient, the inter-layer video decoding apparatus 20 may restrict a vertical component value of the disparity vector as a predetermined value such as 0, so that the inter-layer video decoding apparatus 20 may further accurately predict the disparity vector and may increase the coding efficiency.

The inter-layer video decoding apparatus 20 may decode the current block by using the determined disparity vector of the current block.

Hereinafter, with reference to FIG. 3, a structure of inter-layer prediction that may be performed by the inter-layer video encoding apparatus 10 and the inter-layer video decoding apparatus 20 will now be described in detail.

FIG. 3 illustrates an inter-layer prediction structure according to an embodiment.

The inter-layer video encoding apparatus 10 according to an embodiment may prediction-encode base view images, left view images, and right view images according to a reproduction order 50 of a multiview video prediction structure of FIG. 3.

According to the reproduction order 50 of the multiview video prediction structure according to a related technology, images of the same view are arranged in a horizontal direction. Accordingly, the left view images indicated by 'Left' are arranged in the horizontal direction in a row, the base view images indicated by 'Center' are arranged in the horizontal direction in a row, and the right view images indicated by 'Right' are arranged in the horizontal direction in a row. Compared to the left/right view images, the base view images may be central view images.

Also, images having the same POC order are arranged in a vertical direction. A POC order of images indicates a reproduction order of images forming a video. 'POC X' indicated in the reproduction order 50 of the multiview video prediction structure indicates a relative reproduction order of images in a corresponding column, wherein a reproduction order is in front when a value of X is low, and is behind when the value of X is high.

Thus, according to the reproduction order 50 of the multiview video prediction structure according to the related technology, the left view images indicated by 'Left' are arranged in the horizontal direction according to the POC order (reproduction order), the base view images indicated by 'Center' are arranged in the horizontal direction according to the POC order (reproduction order), and the right view images indicated by 'Right' are arranged in the horizontal direction according to the POC order (reproduction order). Also, the left view image and the right view image located on the same column as the base view image have different views but the same POC order (reproduction order).

Four consecutive images form one group of pictures (GOP) according to views. Each GOP includes images between consecutive anchor pictures, and one anchor picture (key picture).

An anchor picture is a random access point, and when a reproduction location is arbitrarily selected from images arranged according to a reproduction order, i.e., a POC order, while reproducing a video, an anchor picture closest to the reproduction location according to the POC order is reproduced. The base layer images include base layer anchor pictures 51, 52, 53, 54, and 55, the left view images include left view anchor pictures 131, 132, 133, 134, and 135, and the right view images include right view anchor pictures 231, 232, 233, 234, and 235.

Multiview images may be reproduced and predicted (reconstructed) according to a GOP order. First, according to the reproduction order 50 of the multiview video prediction structure, images included in GOP 0 may be reproduced, and then images included in GOP 1 may be reproduced, according to views. In other words, images included in each GOP may be reproduced in an order of GOP 0, GOP 1, GOP 2, and GOP 3. Also, according to a coding order of the multiview video prediction structure, the images included in GOP 1 may be predicted (reconstructed), and then the images included in GOP 1 may be predicted (reconstructed), according to views. In other words, the images included in each GOP may be predicted (reconstructed) in an order of GOP 0, GOP 1, GOP 2, and GOP 3.

According to the reproduction order 50 of the multiview video prediction structure, inter-view prediction (inter-layer prediction) and inter prediction are performed on images. In the multiview video prediction structure, an image where an arrow starts is a reference image, and an image where an arrow ends is an image predicted by using a reference image.

A prediction result of base view images may be encoded and then output in a form of a base view imagestream, and a prediction result of additional view images may be encoded and then output in a form of a layer bitstream. Also, a prediction encoding result of left view images may be output as a first layer bitstream, and a prediction encoding result of right view images may be output as a second layer bitstream.

Only inter-prediction is performed on base view images. In other words, the base layer anchor pictures 51, 52, 53, 54, and 55 of an I-picture type do not refer to other images, but remaining images of B- and b-picture types are predicted by referring to other base view images. Images of a B-picture type are predicted by referring to an anchor picture of an I-picture type, which precedes the images of a B-picture type according to a POC order, and a following anchor picture of an I-picture type. Images of a b-picture type are predicted by referring to an anchor picture of an I-type, which precedes the image of a b-picture type according a POC order, and a following image of a B-picture type, or by referring to an image of a B-picture type, which precedes the images of a b-picture type according to a POC order, and a following anchor picture of an I-picture type.

Inter-view prediction (inter-layer prediction) that references different view images, and inter prediction that references same view images are performed on each of left view images and right view images.

Inter-view prediction (inter-layer prediction) may be performed on the left view anchor pictures 131, 132, 133, 134, and 135 by respectively referring to the base view anchor pictures 51, 52, 53, 54, and 55 having the same POC order. Inter-view prediction may be performed on the right view anchor pictures 231, 232, 233, 234, and 235 by respectively referring to the base view anchor pictures 51, 52, 53, 54, and 55 or the left view anchor pictures 131, 132, 133, 134, and 135 having the same POC order. Also, inter-view prediction (inter-layer prediction) may be performed on remaining images other than the left view images 131, 132, 133, 134, and 135 and the right view images 231, 232, 233, 234, and 235 by referring to other view images having the same POC.

Remaining images other than the anchor pictures 131, 132, 133, 134, and 135 and 231, 232, 233, 234, and 235 from among left view images and right view images are predicted by referring to the same view images.

However, each of the left view images and the right view images may not be predicted by referring to an anchor picture that has a preceding reproduction order from among additional view images of the same view. In other words, in order to perform inter prediction on a current left view image, left view images excluding a left view anchor picture that precedes the current left view image in a reproduction order may be referenced. Equally, in order to perform inter prediction on a current right view image, right view images excluding a right view anchor picture that precedes the current right view image in a reproduction order may be referenced.

Also, in order to perform inter prediction on a current left view image, prediction may be performed by referring to a left view image that belongs to a current GOP but is to be reconstructed before the current left view image, instead of referring to a left view image that belongs to a GOP before the current GOP of the current left view image. The same is applied to a right view image.

The inter-layer video decoding apparatus 20 according to an embodiment may reconstruct base view images, left view images, and right view images according to the reproduction order 50 of the multiview video prediction structure of FIG. 3.

Left view images may be reconstructed via inter-view disparity compensation that references base view images and inter motion compensation that references left view images. Right view images may be reconstructed via inter-view disparity compensation that references base view images and left view images, and inter motion compensation that references right view images. Reference images have to be reconstructed first for disparity compensation and motion compensation with respect to left view images and right view images.

For inter motion compensation of a left view image, left view images may be reconstructed via inter motion compensation that references a reconstructed left view reference image. For inter motion compensation of a right view image, right view images may be reconstructed via inter motion compensation that references a reconstructed right view reference image.

Also, for inter motion compensation of a current left view image, only a left view image that belongs to a current GOP of the current left view image but is to be reconstructed before the current left view image may be referenced, and a left view image that belongs to a GOP before the current GOP is not referenced. The same is applied to a right view image.

Also, the inter-layer video decoding apparatus 20 according to an embodiment may not only perform disparity compensation (or inter-layer prediction compensation) so as to encode or decode a multiview image, but may also perform motion compensation between images (or inter-layer motion prediction and compensation) via inter-view motion vector prediction.

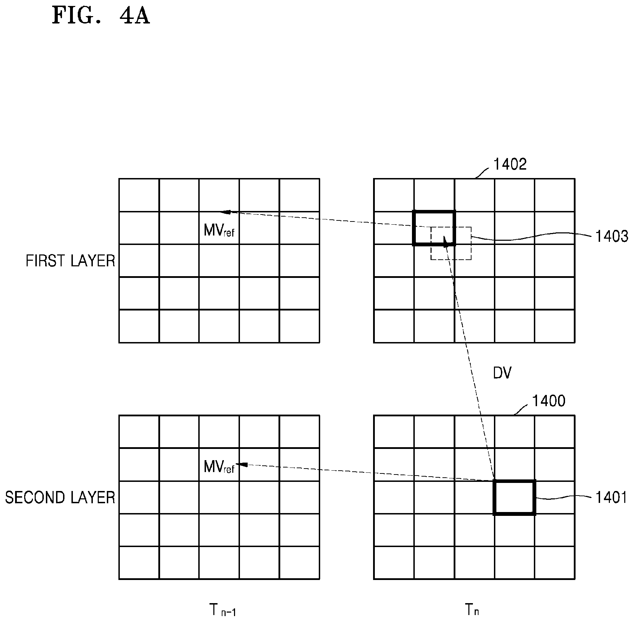

Hereinafter, with reference to FIG. 4A, inter-layer disparity compensation and inter-layer motion vector prediction compensation will be described.

FIG. 4A is a diagram for describing a disparity vector for inter-layer prediction, according to an embodiment.

Referring to FIG. 4A, the inter-layer video decoding apparatus 20 according to various embodiments may perform inter-layer prediction to find a first layer reference block 1403 included in a first layer reference picture 1402, which corresponds to a current block 1401 included in a second layer current picture 1400, by using a disparity vector DV, and may perform disparity compensation by using the first layer reference block 1403.

Also, the inter-layer video decoding apparatus 20 according to various embodiments may, for inter-layer motion prediction and compensation, obtain a reference motion vector mv_ref of the first layer reference block 1403 indicated by the disparity vector DV from the second layer current block 1401 and may predict a motion vector mv_cur of the current block 1401 by using the obtained reference motion vector mv_ref. In this case, the inter-layer video decoding apparatus 20 may perform motion compensation between second layer images by using the predicted motion vector mv_cur.

Here, a reference location may be a location indicated by the disparity vector DV from a center pixel of the current block 1401, or a location indicated by the disparity vector DV from an upper left pixel of the current block 1401.

As described above, in order to perform compensation and prediction by referring to different view images, a disparity vector is required. The disparity vector, as separate information, may be transmitted from an encoding apparatus to a decoding apparatus through a bitstream, or may be predicted based on a depth image or a block. A predicted disparity vector may be a neighboring blocks disparity vector (NBDV) and a depth oriented NBDV (DoNBDV).

The NBDV may denote a disparity vector of a current block, wherein the disparity vector is predicted by using a disparity vector (a motion vector in an inter-layer direction) that is obtained from neighboring block candidates.

In addition, when a depth image from among different layer images is encoded and decoded, a depth block corresponding to a current block may be determined by using the NBDV. In this regard, a representative depth value is determined from among depth values included in the determined depth block, and the determined depth value is converted to a disparity vector by using a camera parameter. The DoNBDV may denote a disparity vector predicted by using the converted disparity vector.

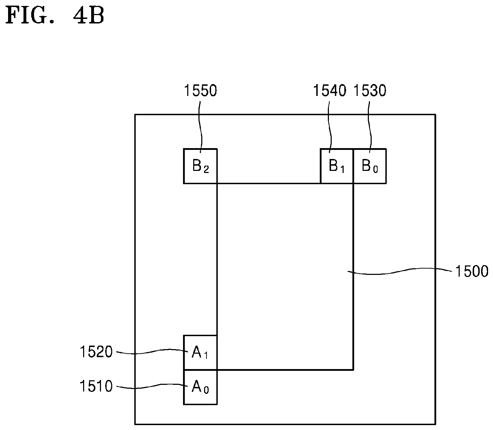

FIG. 4B illustrates an example in which a disparity vector is obtained by using a spatial neighboring block of a current block, according to an embodiment.

Referring to FIG. 4B, the inter-layer video decoding apparatus 20 may search for spatial neighboring block candidates in a predetermined searching order (for example, z-scan or raster scan) in order to obtain a disparity vector of a current block 1500. Here, found neighboring block candidates may be prediction units that are temporally or spatially adjacent to the current block 1500.

For example, a neighboring block A0 1510 located at the left bottom of the current block 1500, a neighboring block A1 1520 located at the left of the current block 1500, a neighboring block B0 1530 located at right top of the current block 1500, a neighboring block B1 1540 located at the top of the current block 1500, and a neighboring block B2 1550 located at the left top of the current block 1500 may be spatial neighboring block candidates for obtaining a disparity vector. In order to obtain a disparity vector, neighboring blocks at predetermined locations may be searched in an order of neighboring block candidates A1 1520, B1 1540, B0 1530, A0 1510, and B2 1550.

When a disparity vector (a motion vector in an inter-layer direction) is obtained from a neighboring block, the inter-layer video decoding apparatus 20 may determine a disparity vector of a current block by using the obtained disparity vector.

For example, if disparity compensation and prediction has been performed on one of the neighboring block A1 1520, B1 1540, B0 1530, A0 1510, and B2 1550, a disparity vector may be obtained from the disparity compensated and predicted block and may be used as a disparity vector of the current block 1500.

If the disparity compensated and predicted block does not exist, the inter-layer video decoding apparatus 20 may determine whether inter-layer prediction has been performed on one of the neighboring block A1 1520, B1 1540, B0 1530, A0 1510, and B2 1550. The inter-layer video decoding apparatus 20 may obtain a disparity vector from the inter-layer predicted block and may use the disparity vector as a disparity vector of the current block 1500.

The inter-layer video decoding apparatus 20 may determine a disparity vector obtained from a neighboring block as a base disparity vector mvDisp of a current block. When the inter-layer video decoding apparatus 20 cannot obtain the disparity vector from the neighboring block, the inter-layer video decoding apparatus 20 may set a base disparity vector of the current block as a (0, 0) vector.

The base disparity vector mvDisp may be used as a disparity vector for encoding and decoding the current block, or may be used in determining a disparity vector that is refined by using a depth image.

Locations and the number of the neighboring blocks for predicting the disparity vector may not be limited to the present example and may be changed.

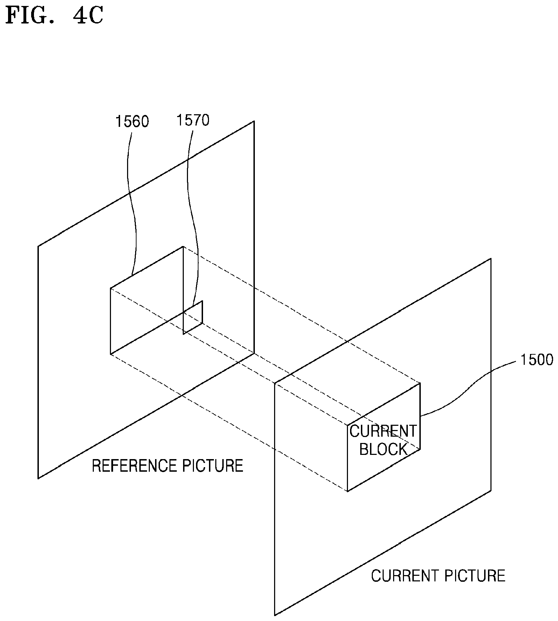

FIG. 4C illustrates an example in which a disparity vector is obtained by using a temporal neighboring block of a current block, according to an embodiment.

Referring to FIG. 4C, in order for the inter-layer video decoding apparatus 20 to perform inter prediction on a current block 1500 included in a current picture, at least one of a block Col 1560 that is included in a reference picture and is co-located with the current block 1500 and an adjacent block of the co-located block 1560 may be included in a temporal neighboring block candidate. For example, a right bottom block BR 1570 of the co-located block Col 1560 may be included in a temporal prediction candidate. Meanwhile, a block used for temporal prediction candidate determination may be a coding unit or a prediction unit.

FIG. 5 illustrates a procedure of determining a disparity vector of a current block by using a depth image, according to an embodiment.

The inter-layer video decoding apparatus 20 may determine whether a depth image 1720 of a first layer is available, by using depth refinement information depth_refinement_flag obtained from a bitstream. If the depth refinement information indicates that a disparity vector of a current block 1710 of a current image 1700 of a second layer is obtainable by using the depth image 1720 of the first layer, the inter-layer video decoding apparatus 20 may determine a disparity vector mvRefinedDisp of the current block 1710 by using a base disparity vector mvDisp and the depth image 1720 of the first layer. In this regard, the base disparity vector mvDisp may be a disparity vector obtained from a neighboring block.

In more detail, the inter-layer video decoding apparatus 20 may determine a reference block 1730 of the depth image 1720 of the first layer, based on a location of the current block 1710 of the second layer, wherein the reference block 1730 corresponds to the base disparity vector mvDisp.

Next, the inter-layer video decoding apparatus 20 may refine, to a disparity vector, at least one of corner depth values 1731, 1732, 1733, and 1734 of the determined reference block 1730 of the depth image 1720. For example, the inter-layer video decoding apparatus 20 may obtain a largest depth value from among the corner depth values 1731, 1732, 1733, and 1734 of the determined reference block 1730 and may refine the largest depth value to the disparity vector.

For example, the inter-layer video decoding apparatus 20 may determine a first component value 'disparitySamples[][]' of the disparity vector refined to a size (nCbS)x(nCbS), wherein the refinement is performed by using, as syntax elements, a location (xCb,yCb) of the current block 1710, the base disparity vector mvDisp, and a reference view index refViewiewIdx. For example, the first component value may be a horizontal component of the disparity vector. nCbS may represent a horizontal direction size or vertical direction size of a coding unit of the current block 1710.

Then, the inter-layer video decoding apparatus 20 may determine a second component value of the refined disparity vector as a predetermined value. When a plurality of cameras are placed in parallel in a horizontal direction, a second component may be a vertical component of the disparity vector. For example, when the plurality of cameras are placed in parallel in a horizontal direction, the inter-layer video decoding apparatus 20 may determine a vertical component value of the refined disparity vector as 0. For example, the determined disparity vector mvRefinedDisp may be expressed as (disparitySamples[0][0], 0).

Alternatively, the inter-layer video decoding apparatus 20 may determine the first component value 'disparitySamples[][]' of the refined disparity vector, and may determine the disparity vector mvRefinedDisp of the current block 1710 by using a second component value of the base disparity vector mvDisp. For example, the determined disparity vector mvRefinedDisp may be expressed as (disparitySamples[0][0], mvDisp[1]).

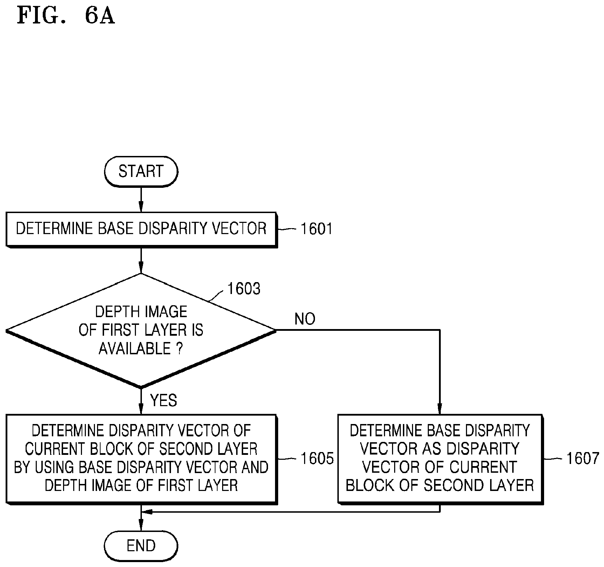

FIG. 6A is a flowchart of a method of determining a disparity vector of a current block, according to an embodiment.

Referring to FIG. 6A, in operation 1601, the inter-layer video decoding apparatus 20 may determine a base disparity vector. For example, the inter-layer video decoding apparatus 20 may obtain the base disparity vector from a neighboring block candidate of a current block.

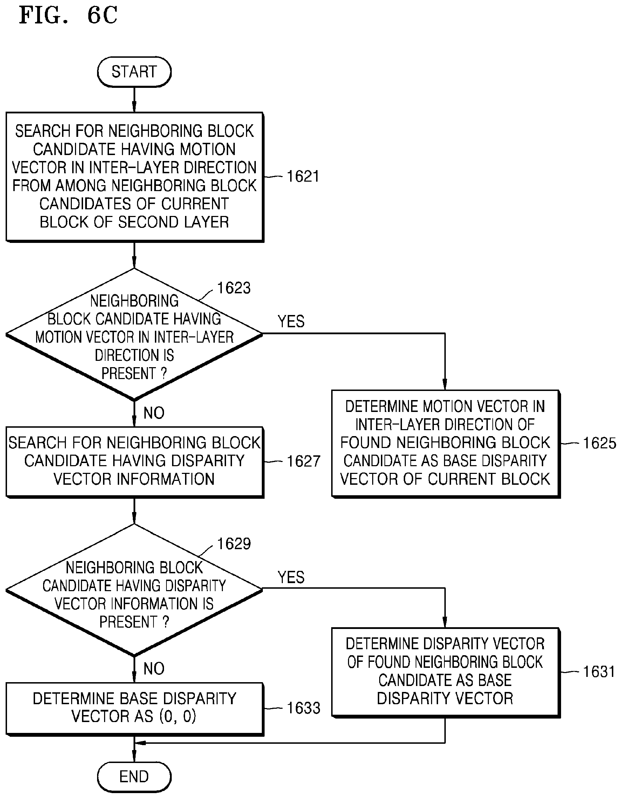

A specific method of obtaining the base disparity vector will be described below with reference to FIG. 6C.

When the base disparity vector is obtained, in operation 1603, the inter-layer video decoding apparatus 20 may determine whether a depth image of a first layer is available. The depth image of the first layer may be an image that is indicated by the base disparity vector and corresponds to the current block of a second layer.

The inter-layer video decoding apparatus 20 may determine whether a disparity vector of the current block of the second layer is obtainable by using the depth image of the first layer, by taking into account depth refinement information obtained from a bitstream.

If the depth image of the first layer is available, in operation 1605, the inter-layer video decoding apparatus 20 may refine the disparity vector by using the depth image of the first layer.

In more detail, the inter-layer video decoding apparatus 20 may determine the refined disparity vector of the current block by using the base disparity vector and the depth image of the first layer.

For example, the inter-layer video decoding apparatus 20 may determine a first component value of the disparity vector of the current block by using the base disparity vector and the depth image of the first layer. For example, when a plurality of cameras are placed in parallel in a horizontal direction, the first component value may be a horizontal component value. In addition, the inter-layer video decoding apparatus 20 may determine a second component value as a predetermined value. The second component value may be a vertical component value. Alternatively, the second component value that is set as the predetermined value may be a component value that is not related to depth values of the depth image of the first layer. For example, the predetermined value may be 0.

Alternatively, the inter-layer video decoding apparatus 20 may determine the first component value of the disparity vector of the current block by using the base disparity vector and the depth image of the first layer, and may determine the second component value of the disparity vector of the current block by using a second component value of the base disparity vector. For example, the inter-layer video decoding apparatus 20 may determine a horizontal component value of the disparity vector of the current block by using the base disparity vector and the depth image of the first layer, and may determine a vertical component value of the base disparity vector as a vertical component value of the disparity vector of the current block.

If the depth image of the first layer is not available, in operation 1607, the inter-layer video decoding apparatus 20 may determine the disparity vector of the current block of the second layer by using the base disparity vector.

For example, the inter-layer video decoding apparatus 20 may determine the base disparity vector as the disparity vector of the current block. Alternatively, the inter-layer video decoding apparatus 20 may determine the disparity vector of the current block by determining a first component value of the base disparity vector as the first component value of the disparity vector of the current block and by determining the second component value of the base disparity vector as a predetermined value. For example, the predetermined value may be 0. In this regard, a first component may be a horizontal component and a second component may be a vertical component.

The inter-layer video decoding apparatus 20 may decode the current block by using the disparity vector of the current block which is determined in the operation 1605 or 1607.

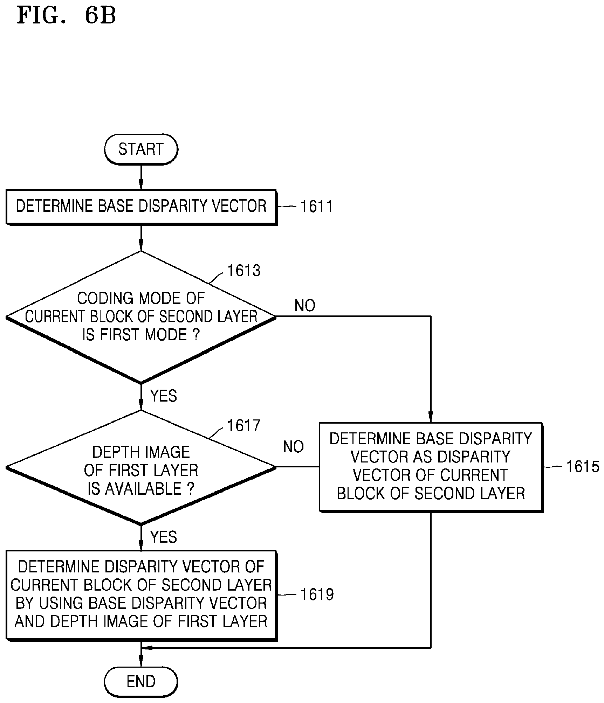

FIG. 6B is a flowchart of a method of determining a disparity vector of a current block, according to an embodiment.

FIG. 6B is the flowchart of the method of determining the disparity vector according to a coding mode of the current block of a second layer.

Referring to FIG. 6B, in operation 1611, the inter-layer video decoding apparatus 20 may determine a base disparity vector. For example, the inter-layer video decoding apparatus 20 may obtain the base disparity vector from a neighboring block candidate of the current block.

A specific method of obtaining the base disparity vector will be described below with reference to FIG. 6C.

When the base disparity vector is obtained, in operation 1613, the inter-layer video decoding apparatus 20 may check a coding mode of the current block which is obtained from a bitstream.

The coding mode of the current block may be one of various coding modes each using a disparity vector. For example, the coding modes each using a disparity vector may include an inter-view motion vector mode, a disparity information motion vector mode, a view synthesis prediction mode, an advanced residual prediction mode, a depth-based block partitioning mode, a shift inter-view motion vector mode, a shift disparity information motion vector mode, or the like.

To apply a same disparity vector determining method to the various coding modes each using a disparity vector may deteriorate coding efficiency, thus, the inter-layer video decoding apparatus 20 may determine the disparity vector of the current block to vary according to coding modes of the current block.

In more detail, the inter-layer video decoding apparatus 20 may pre-determine a method of determining a disparity vector according to the coding modes. For example, the inter-layer video decoding apparatus 20 may pre-determine to use a disparity vector refined by using a depth image during the inter-view motion vector mode, the disparity information motion vector mode, the view synthesis prediction mode, and the depth-based block partitioning mode. During the advanced residual prediction mode, the inter-layer video decoding apparatus 20 may pre-determine to use a disparity vector obtained form a neighboring block candidate.

Modes that use a disparity vector refined by using a depth image may be referred to as a first mode, and modes that use a disparity vector obtained from a neighboring block candidate may be referred to as a second mode. According to encoding and decoding performances, the inter-layer video decoding apparatus 20 may pre-set the modes corresponding to the first mode and the modes corresponding to the second mode.

In operation 1613, the inter-layer video decoding apparatus 20 may determine whether the coding mode of the current block of the second layer corresponds to the first mode.

If the coding mode of the current block corresponds to the second mode, in operation 1615, the inter-layer video decoding apparatus 20 may determine the disparity vector of the current block of the second layer by using the base disparity vector.

For example, the inter-layer video decoding apparatus 20 may determine the base disparity vector as the disparity vector of the current block. Alternatively, the inter-layer video decoding apparatus 20 may determine the disparity vector of the current block by determining a first component value of the base disparity vector as the first component value of the disparity vector of the current block and by determining a second component value of the base disparity vector as a predetermined value. For example, the predetermined value may be 0. In this regard, a first component may be a horizontal component and a second component may be a vertical component.

If the coding mode of the current block corresponds to the first mode, in operation 1617, the inter-layer video decoding apparatus 20 may determine whether the depth image of the first layer is available. The inter-layer video decoding apparatus 20 may determine whether the disparity vector of the current block of the second layer is obtainable by using the depth image of the first layer, by taking into account depth refinement information obtained from a bitstream.

If the depth image of the first layer is not available, in operation 1615, the inter-layer video decoding apparatus 20 may determine the disparity vector of the current block of the second layer by using the base disparity vector.

If the depth image of the first layer is available, in operation 1617, the inter-layer video decoding apparatus 20 may determine the disparity vector of the current block which is refined by using the base disparity vector and the depth image of the first layer.

For example, the inter-layer video decoding apparatus 20 may determine a first component value of the disparity vector of the current block by using the base disparity vector and the depth image of the first layer. For example, when a plurality of cameras are placed in parallel in a horizontal direction, the first component value may be a horizontal component value. In addition, the inter-layer video decoding apparatus 20 may determine a second component value as a predetermined value. The second component value may be a vertical component value. Alternatively, the second component value that is set as the predetermined value may be a component value that is not related to depth values of the depth image of the first layer. For example, the predetermined value may be 0.

Alternatively, the inter-layer video decoding apparatus 20 may determine the first component value of the disparity vector of the current block by using the base disparity vector and the depth image of the first layer, and may determine the second component value of the disparity vector of the current block by using a second component value of the base disparity vector. For example, the inter-layer video decoding apparatus 20 may determine a horizontal component value of the disparity vector of the current block by using the base disparity vector and the depth image of the first layer, and may determine a vertical component value of the base disparity vector as a vertical component value of the disparity vector of the current block.

FIG. 6C is a flowchart of a method of determining a base disparity vector, according to an embodiment.

In operation 1621, the inter-layer video decoding apparatus 20 may search for a neighboring block candidate having a motion vector in an inter-layer direction from among neighboring block candidates of a current block of a second layer. The neighboring block candidates may include spatial candidates and temporal candidates.

In operation 1623, the inter-layer video decoding apparatus 20 may determine whether the neighboring block candidate having the motion vector in the inter-layer direction is present.

If the neighboring block candidate having the motion vector in the inter-layer direction is present, in operation 1625, the inter-layer video decoding apparatus 20 may determine the motion vector in the inter-layer direction of the found neighboring block candidate as a base disparity vector of the current block.

If the neighboring block candidate having the motion vector in the inter-layer direction is not present, in operation 1627, the inter-layer video decoding apparatus 20 may search for a neighboring block candidate having disparity vector information.

In operation 1629, the inter-layer video decoding apparatus 20 may determine whether the neighboring block candidate having the disparity vector information is present.

If the neighboring block candidate having the disparity vector information is present, in operation 1631, the inter-layer video decoding apparatus 20 may determine a disparity vector of the found neighboring block candidate as the base disparity vector.

If the neighboring block candidate having the disparity vector information is not present, in operation 1633, the inter-layer video decoding apparatus 20 may determine the base disparity vector of the current block as a (0, 0) vector.

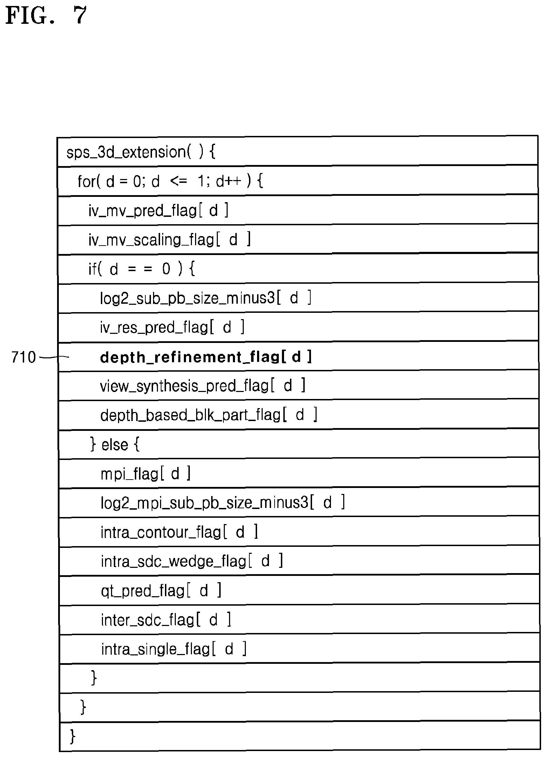

FIG. 7 illustrates sequence parameter set (SPS) multiview extension information according to an embodiment.

Information related to encoding with respect to a single view video may be transmitted via SPS information, and information related to encoding with respect to an image of each of layers configuring a multiview video may be included in SPS multiview extension information sps_3d_extension and then may be transmitted to a decoder.

Describing syntax related to the embodiment of the present disclosure with reference to FIG. 7, depth_refinement_flag[d] 710 may specify whether it is possible to obtain a disparity vector of a current block of a second layer, wherein the disparity vector is refined by using a depth image of a first layer which corresponds to the current block of the second layer.

If the disparity vector of the current block of the second layer which is obtained by using the depth image of the first layer is available, depth_refinement_flag[d] 710 may have a value of 1, and if the disparity vector of the current block of the second layer which is obtained by using the depth image of the first layer is not available, depth_refinement_flag[d] 710 may have a value of 0.

The decoder may obtain depth_refinement_flag[d] 710 from an SPS, and when the decoder decodes blocks included in an image of the current layer, if depth_refinement_flag[d] 710 has the value of 1, the decoder may use the refined disparity vector, and if depth_refinement_flag[d] 710 has the value of 0, the decoder may use a disparity vector obtained from a neighboring block candidate.

As described above, the inter-layer video encoding apparatus 10 according to various embodiments and the inter-layer video decoding apparatus 20 according to various embodiments may spilt blocks of video data into coding units having a tree structure, and coding units, prediction units, and transformation units may be used for inter-layer prediction or inter prediction of coding units. Hereinafter, with reference to FIGS. 8 through 20, a video encoding method, a video encoding apparatus, a video decoding method, and a video decoding apparatus based on coding units having a tree structure and transformation units, according to various embodiments, will be described.

In principle, during encoding and decoding processes for a multi-layer video, encoding and decoding processes for first layer images and encoding and decoding processes for second layer images are separately performed. In other words, when inter-layer prediction is performed on a multi-layer video, encoding and decoding results of single-layer videos may be mutually referred to, but separate encoding and decoding processes are performed according to single-layer videos.

Accordingly, since video encoding and decoding processes based on coding units having a tree structure as described below with reference to FIGS. 8 through 20 for convenience of description are video encoding and decoding processes for processing a single-layer video, only inter prediction and motion compensation are performed. However, as described above with reference to FIGS. 1A through 7B, in order to encode and decode a video stream, inter-layer prediction and compensation are performed on base layer images and second layer images.

Accordingly, in order for the encoder 12 of the inter-layer video encoding apparatus 10 according to various embodiments to encode a multi-layer video based on coding units having a tree structure, the inter-layer video encoding apparatus 10 may include as many video encoding apparatuses 100 of FIG. 8 as the number of layers of the multi-layer video so as to perform video encoding according to each single-layer video, thereby controlling each video encoding apparatus 100 to encode an assigned single-layer video. Also, the inter-layer video encoding apparatus 10 may perform inter-view prediction by using encoding results of individual single viewpoints of each video encoding apparatus 100. Accordingly, the encoder 12 of the inter-layer video encoding apparatus 10 may generate a base view video stream and a second layer video stream, which include encoding results according to layers.

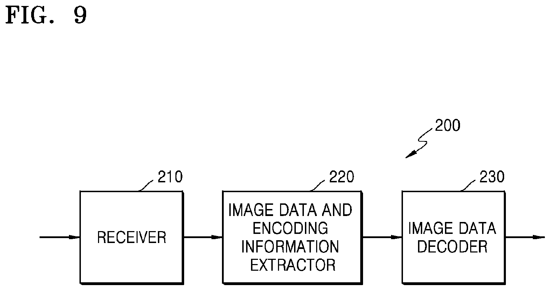

Similarly, in order for the decoder 24 of the inter-layer video decoding apparatus 20 according to various embodiments to decode a multi-layer video based on coding units having a tree structure, the inter-layer video decoding apparatus 20 may include as many video decoding apparatuses 200 of FIG. 9 as the number of layers of the multi-layer video so as to perform video decoding according to layers with respect to a received first layer video stream and a received second layer video stream, thereby controlling each video decoding apparatus 200 to decode an assigned single-layer video. Also, the inter-layer video decoding apparatus 20 may perform inter-layer compensation by using a decoding result of an individual single layer of each video decoding apparatus 200. Accordingly, the decoder 24 of the inter-layer video decoding apparatus 20 may generate first layer images and second layer images which are reconstructed according to layers.

FIG. 8 is a block diagram of a video encoding apparatus based on coding units according to tree structure 100, according to an embodiment of the present disclosure.

The video encoding apparatus based on coding units according to tree structure 100 according to the embodiment includes a coding unit determiner 120 and an output unit 130. Hereinafter, for convenience of description, the video encoding apparatus based on coding units according to tree structure 100 according to the embodiment will be abbreviated to the 'video encoding apparatus 100'.

The coding unit determiner 120 may split a current picture based on a largest coding unit that is a coding unit having a maximum size for a current picture of an image. If the current picture is larger than the largest coding unit, image data of the current picture may be split into the at least one largest coding unit. The largest coding unit according to various embodiments may be a data unit having a size of 32x32, 64x64, 128x128, 256x256, etc., wherein a shape of the data unit is a square having a width and length in squares of 2.

A coding unit according to various embodiments may be characterized by a maximum size and a depth. The depth denotes the number of times the coding unit is spatially split from the largest coding unit, and as the depth deepens, deeper coding units according to depths may be split from the largest coding unit to a minimum coding unit. A depth of the largest coding unit is an uppermost depth and a depth of the minimum coding unit is a lowermost depth. Since a size of a coding unit corresponding to each depth decreases as the depth of the largest coding unit deepens, a coding unit corresponding to an upper depth may include a plurality of coding units corresponding to lower depths.

As described above, the image data of the current picture is split into the largest coding units according to a maximum size of the coding unit, and each of the largest coding units may include deeper coding units that are split according to depths. Since the largest coding unit according to various embodiments is split according to depths, the image data of a spatial domain included in the largest coding unit may be hierarchically classified according to depths.

A maximum depth and a maximum size of a coding unit, which limit the total number of times a height and a width of the largest coding unit are hierarchically split, may be predetermined.

The coding unit determiner 120 encodes at least one split region obtained by splitting a region of the largest coding unit according to depths, and determines a depth to output a finally encoded image data according to the at least one split region. In other words, the coding unit determiner 120 determines a final depth by encoding the image data in the deeper coding units according to depths, according to the largest coding unit of the current picture, and selecting a depth having the least encoding error. The determined final depth and the encoded image data according to the determined coded depth are output to the output unit 130.

The image data in the largest coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one final depth may be selected for each largest coding unit.

The size of the largest coding unit is split as a coding unit is hierarchically split according to depths, and as the number of coding units increases. Also, even if coding units correspond to the same depth in one largest coding unit, it is determined whether to split each of the coding units corresponding to the same depth to a lower depth by measuring an encoding error of the image data of the each coding unit, separately. Accordingly, even when image data is included in one largest coding unit, the encoding errors may differ according to regions in the one largest coding unit, and thus the final depths may differ according to regions in the image data. Thus, one or more final depths may be determined in one largest coding unit, and the image data of the largest coding unit may be divided according to coding units of at least one final depth.

Accordingly, the coding unit determiner 120 according to various embodiments may determine coding units having a tree structure included in the largest coding unit. The 'coding units having a tree structure' according to various embodiments include coding units corresponding to a depth determined to be the final depth, from among all deeper coding units included in the largest coding unit. A coding unit of a final depth may be hierarchically determined according to depths in the same region of the largest coding unit, and may be independently determined in different regions. Equally, a final depth in a current region may be independently determined from a final depth in another region.

A maximum depth according to various embodiments is an index related to the number of splitting times from a largest coding unit to a minimum coding unit. A first maximum depth according to various embodiments may denote the total number of splitting times from the largest coding unit to the minimum coding unit. A second maximum depth according to various embodiments may denote the total number of depth levels from the largest coding unit to the minimum coding unit. For example, when a depth of the largest coding unit is 0, a depth of a coding unit, in which the largest coding unit is split once, may be set to 1, and a depth of a coding unit, in which the largest coding unit is split twice, may be set to 2. In this regard, if the minimum coding unit is a coding unit in which the largest coding unit is split four times, depth levels of depths 0, 1, 2, 3, and 4 exist, and thus the first maximum depth may be set to 4, and the second maximum depth may be set to 5.

Prediction encoding and transformation may be performed according to the largest coding unit. The prediction encoding and the transformation are also performed based on the deeper coding units according to a depth equal to or depths less than the maximum depth, according to the largest coding unit.

Since the number of deeper coding units increases whenever the largest coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a largest coding unit.

The video encoding apparatus 100 according to various embodiments may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the largest coding unit, the prediction encoding may be performed based on a coding unit corresponding to a final depth according to various embodiments, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit and a data unit obtained by splitting at least one of a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition mode according to various embodiments may selectively include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, or partitions having arbitrary shapes.

A prediction mode of the prediction unit may be at least one of an intra mode, a inter mode, and a skip mode. For example, the intra mode and the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to various embodiments may perform not only the transformation on the image data in a coding unit based not only on the coding unit for encoding the image data, but also may perform the transformation on the image data based on a data unit that is different from the coding unit. In order to perform the transformation in the coding unit, the transformation may be performed based on a transformation unit having a size less than or equal to the coding unit. For example, the transformation unit may include a data unit for an intra mode and a transformation unit for an inter mode.

The transformation unit in the coding unit may be recursively split into smaller sized regions in a manner similar to that in which the coding unit is split according to the tree structure, according to various embodiments. Thus, residual data in the coding unit may be split according to the transformation unit having the tree structure according to transformation depths.

A transformation depth indicating the number of splitting times to reach the transformation unit by splitting the height and width of the coding unit may also be set in the transformation unit according to various embodiments. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Split information according to depths requires not only information about a depth but also requires information related to prediction encoding and transformation. Accordingly, the coding unit determiner 120 not only determines a depth having a least encoding error, but also determines a partition mode of splitting a prediction unit into a partition, a prediction mode according to prediction units, and a size of a transformation unit for transformation.

Coding units according to a tree structure in a largest coding unit and methods of determining a prediction unit/partition, and a transformation unit, according to various embodiments, will be described in detail later with reference to FIGS. 9 through 19.

The coding unit determiner 120 may measure an encoding error of deeper coding units according to depths by using Rate-Distortion Optimization based on Lagrangian multipliers.

The output unit 130 outputs the image data of the largest coding unit, which is encoded based on the at least one depth determined by the coding unit determiner 120, and split information according to the depth, in bitstreams.

The encoded image data may be obtained by encoding residual data of an image.

The split information according to depth may include information about the depth, about the partition mode in the prediction unit, about the prediction mode, and about split of the transformation unit.

The information about the final depth may be defined by using split information according to depths, which indicates whether encoding is performed on coding units of a lower depth instead of a current depth. If the current depth of the current coding unit is a depth, the current coding unit is encoded, and thus the split information may be defined not to split the current coding unit to a lower depth. Alternatively, if the current depth of the current coding unit is not the depth, the encoding is performed on the coding unit of the lower depth, and thus the split information may be defined to split the current coding unit to obtain the coding units of the lower depth.

If the current depth is not the depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one largest coding unit, and split information is determined for a coding unit of a depth, at least one piece of split information may be determined for one largest coding unit. Also, a depth of the image data of the largest coding unit may be different according to locations since the image data is hierarchically split according to depths, and thus a depth and split information may be set for the image data.

Accordingly, the output unit 130 according to various embodiments may assign a corresponding depth and encoding information about an encoding mode to at least one of the coding unit, the prediction unit, and a minimum unit included in the largest coding unit.

The minimum unit according to various embodiments is a square data unit obtained by splitting the minimum coding unit constituting the lowermost depth by 4. Alternatively, the minimum unit according to various embodiments may be a maximum square data unit that may be included in all of the coding units, prediction units, partition units, and transformation units included in the largest coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, motion information, and slice type information.

In the video encoding apparatus 100 according to the simplest embodiment, the deeper coding unit may be a coding unit obtained by dividing a height or width of a coding unit of an upper depth, which is one layer above, by two. That is, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each largest coding unit, based on the size of the largest coding unit and the maximum depth determined considering characteristics of the current picture. Also, since encoding may be performed on each largest coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100 according to various embodiments, image compression efficiency may be increased since a coding unit is adjusted while considering characteristics of an image while increasing a maximum size of a coding unit while considering a size of the image.

The inter-layer video encoding apparatus 10 described above with reference to FIG. 1A may include as many video encoding apparatuses 100 as the number of layers, in order to encode single-layer images according to layers of a multi-layer video. For example, the first layer encoder 14 may include one video encoding apparatus 100 and the second layer encoder 16 may include as many video encoding apparatuses 100 as the number of second layers.

When the video encoding apparatus 100 encodes first layer images, the coding unit determiner 120 may determine, for each largest coding unit, a prediction unit for inter-prediction according to coding units having a tree structure, and may perform inter-prediction according to prediction units.

Even when the video encoding apparatus 100 encodes second layer images, the coding unit determiner 120 may determine, for each largest coding unit, coding units and prediction units having a tree structure, and may perform inter-prediction according to prediction units.

The video encoding apparatus 100 may encode a luminance difference to compensate for a luminance difference between a first layer image and a second layer image. However, whether to perform luminance may be determined according to an encoding mode of a coding unit. For example, luminance compensation may be performed only on a prediction unit having a size of 2Nx2N.

FIG. 9 is a block diagram of a video decoding apparatus based on coding units according to tree structure 200, according to various embodiments.

The video decoding apparatus based on coding units according to tree structure 200 according to an embodiment includes a receiver 210, an image data and encoding information extractor 220, and an image data decoder 230. For convenience of description, the video decoding apparatus based on coding units according to tree structure 200 according to an embodiment will be abbreviated to the 'video decoding apparatus 200'.

Definitions of various terms, such as a coding unit, a depth, a prediction unit, a transformation unit, and various split information, for decoding operations of the video decoding apparatus 200 according to various embodiments are identical to those described with reference to FIG. 8 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each largest coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts a final depth and split information for the coding units having a tree structure according to each largest coding unit, from the parsed bitstream. The extracted final depth and split information are output to the image data decoder 230. That is, the image data in a bit stream is split into the largest coding unit so that the image data decoder 230 decodes the image data for each largest coding unit.

A depth and split information according to the largest coding unit may be set for at least one piece of depth information, and split information may include information about a partition mode of a corresponding coding unit, about a prediction mode, and about split of a transformation unit. Also, split information according to depths may be extracted as the information about a depth.

The depth and the split information according to each largest coding unit extracted by the image data and encoding information extractor 220 is a depth and split information determined to generate a minimum encoding error when an encoder, such as the video encoding apparatus 100 according to various embodiments, repeatedly performs encoding for each deeper coding unit according to depths according to each largest coding unit. Accordingly, the video decoding apparatus 200 may reconstruct an image by decoding the image data according to a coded depth and an encoding mode that generates the minimum encoding error.

Since encoding information according to various embodiments about a depth and an encoding mode may be assigned to a predetermined data unit from among a corresponding coding unit, a prediction unit, and a minimum unit, the image data and encoding information extractor 220 may extract the depth and the split information according to the predetermined data units. If the depth and the split information of a corresponding largest coding unit is recorded according to predetermined data units, the predetermined data units to which the same depth and the same split information is assigned may be inferred to be the data units included in the same largest coding unit.

The image data decoder 230 may reconstruct the current picture by decoding the image data in each largest coding unit based on the depth and the split information according to the largest coding units. In other words, the image data decoder 230 may decode the encoded image data based on the extracted information about the partition mode, the prediction mode, and the transformation unit for each coding unit from among the coding units having the tree structure included in each largest coding unit. A decoding process may include a prediction including intra prediction and motion compensation, and an inverse transformation.

The image data decoder 230 may perform intra prediction or motion compensation according to a partition and a prediction mode of each coding unit, based on the information about the partition mode and the prediction mode of the prediction unit of the coding unit according to depths.

In addition, the image data decoder 230 may read information about a transformation unit according to a tree structure for each coding unit so as to perform inverse transformation based on transformation units for each coding unit, for inverse transformation for each largest coding unit. Via the inverse transformation, a pixel value of a spatial region of the coding unit may be reconstructed.

The image data decoder 230 may determine a depth of a current largest coding unit by using split information according to depths. If the split information indicates that image data is no longer split in the current depth, the current depth is a depth. Accordingly, the image data decoder 230 may decode encoded data in the current largest coding unit by using the information about the partition mode of the prediction unit, the prediction mode, and the size of the transformation unit.

That is, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The inter-layer video decoding apparatus 20 described above with reference to FIG. 2A may include video decoding apparatuses 200 as much as the number of viewpoints, so as to reconstruct first layer images and second layer images by decoding a received first layer image stream and a received second layer image stream.

When the first layer image stream is received, the image data decoder 230 of the video decoding apparatus 200 may split samples of first layer images extracted from the first layer image stream by the image data and encoding information extractor 220 into coding units having a tree structure. The image data decoder 230 may reconstruct the first layer images by performing motion compensation according to prediction units for inter prediction, on the coding units having the tree structure obtained by splitting the samples of the first layer images.

When the second layer image stream is received, the image data decoder 230 of the video decoding apparatus 200 may split samples of second layer images extracted from the second layer image stream by the image data and encoding information extractor 220 into coding units having a tree structure. The image data decoder 230 may reconstruct the second layer images by performing motion compensation according to prediction units for inter prediction, on the coding units obtained by splitting the samples of the second layer images.

The extractor 220 may obtain information related to a luminance error from a bitstream so as to compensate for a luminance difference between a first layer image and a second layer image. However, whether to perform luminance may be determined according to an encoding mode of a coding unit. For example, luminance compensation may be performed only on a prediction unit having a size of 2Nx2N.

Thus, the video decoding apparatus 200 may obtain information about at least one coding unit that generates the minimum encoding error when encoding is recursively performed for each largest coding unit, and may use the information to decode the current picture. In other words, the coding units having the tree structure determined to be the optimum coding units in each largest coding unit may be decoded.

Accordingly, even if an image has high resolution or has an excessively large data amount, the image may be efficiently decoded and reconstructed by using a size of a coding unit and an encoding mode, which are adaptively determined according to characteristics of the image, by using optimum split information received from an encoder.

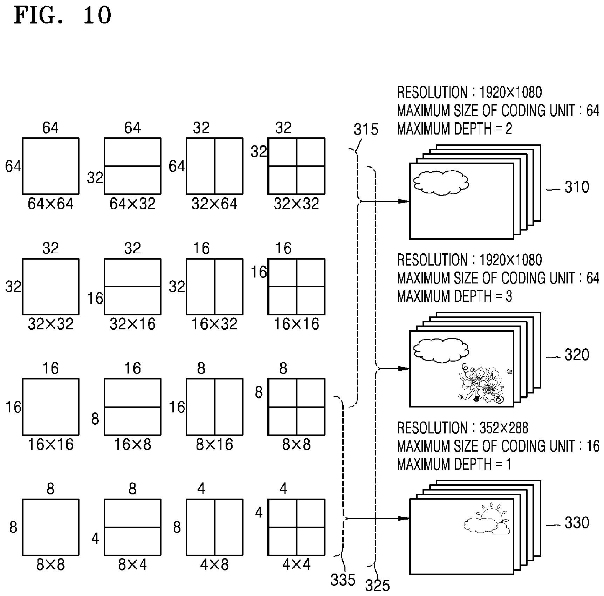

FIG. 10 is a diagram for describing a concept of coding units according to various embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 10 denotes a total number of splits from a largest coding unit to a minimum coding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a largest coding unit having a long axis size of 64, and coding units having long axis sizes of 32 and 16 since depths are deepened to two layers by splitting the largest coding unit twice. Since the maximum depth of the video data 330 is 1, coding units 335 of the video data 330 may include a largest coding unit having a long axis size of 16, and coding units having a long axis size of 8 since depths are deepened to one layer by splitting the largest coding unit once.

Since the maximum depth of the video data 320 is 3, coding units 325 of the video data 320 may include a largest coding unit having a long axis size of 64, and coding units having long axis sizes of 32, 16, and 8 since the depths are deepened to 3 layers by splitting the largest coding unit three times. As a depth deepens, detailed information may be precisely expressed.

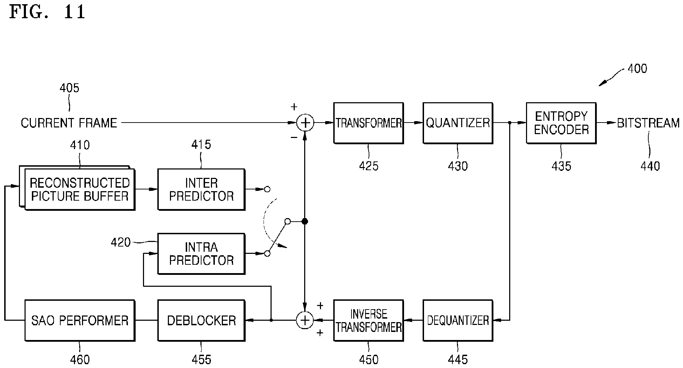

FIG. 11 is a block diagram of an image encoder 400 based on coding units, according to various embodiments.

The image encoder 400 according to various embodiments performs operations of the coding unit determiner 120 of the video encoding apparatus 100 to encode image data. In other words, an intra predictor 420 performs intra prediction on coding units in an intra mode, from among a current frame 405, per prediction unit, and an inter predictor 415 performs inter prediction on coding units in an inter mode by using the current image 405 and a reference image obtained by a reconstructed picture buffer 410, per prediction unit. The current picture 405 may be split into largest coding units, and then the largest coding units may be sequentially encoded. Here, the encoding may be performed on coding units split in a tree structure from the largest coding unit.

Residual data is generated by subtracting prediction data of a coding unit of each mode output from the intra predictor 420 or the inter predictor 415 from data of the current image 405 to be encoded, and the residual data is output as a quantized transformation coefficient through a transformer 425 and a quantizer 430 per transformation unit. The quantized transformation coefficient is reconstructed to residual data in a spatial domain through an inverse quantizer 445 and an inverse transformer 450. The residual data in the spatial domain is added to the prediction data of the coding unit of each mode output from the intra predictor 420 or the inter predictor 415 to be reconstructed as data in a spatial domain of the coding unit of the current image 405. The data in the spatial domain passes through a deblocker 455 and a sample adaptive offset (SAO) performer 460 and thus a reconstructed image is generated. The reconstructed image is stored in the reconstructed picture buffer 410. Reconstructed images stored in the reconstructed picture buffer 410 may be used as a reference image for inter prediction of another image. The quantized transformation coefficient obtained through the transformer 425 and the quantizer 430 may be output as a bitstream 440 through an entropy encoder 435.

In order for the image encoder 400 according to various embodiments to be applied in the video encoding apparatus 100, components of the image encoder 400, i.e., the inter predictor 415, the intra predictor 420, the transformer 425, the quantizer 430, the entropy encoder 435, the inverse quantizer 445, the inverse transformer 450, the deblocking unit 455, and the SAO performer 460 perform operations based on each coding unit among coding units having a tree structure per largest coding unit.

In particular, the intra predictor 420 and the inter predictor 415 may determine partitions and a prediction mode of each coding unit from among the coding units having a tree structure while considering the maximum size and the maximum depth of a current largest coding unit, and the transformer 425 may determine whether to split a transformation unit according to a quad-tree in each coding unit from among the coding units having the tree structure.

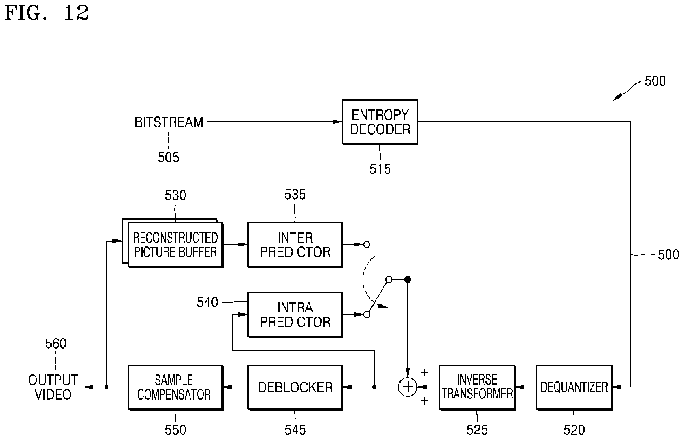

FIG. 12 is a block diagram of an image decoder 500 based on coding units according to various embodiments.

An entropy decoder 515 parses encoded image data that is to be decoded and encoding information required for decoding from a bitstream 505. The encoded image data is a quantized transformation coefficient, and an inverse quantizer 520 and an inverse transformer 525 reconstructs residual data from the quantized transformation coefficient.

An intra predictor 540 performs intra prediction on a coding unit in an intra mode according to prediction units. An inter predictor performs inter prediction on a coding unit in an inter mode from a current image according to prediction units, by using a reference image obtained by a reconstructed picture buffer 530.

Data in a spatial domain of coding units of the current image is reconstructed by adding the residual data and the prediction data of a coding unit of each mode through the intra predictor 540 or the inter predictor 535, and the data in the spatial domain may be output as a reconstructed image through a deblocking unit 545 and an SAO performer 550. Also, reconstructed images that are stored in the reconstructed picture buffer 530 may be output as reference images.

In order to decode the image data in the image data decoder 230 of the video decoding apparatus 200, operations after the entropy decoder 515 of the image decoder 500 according to various embodiments may be performed.

In order for the image decoder 500 to be applied in the video decoding apparatus 200 according to various embodiments, components of the image decoder 500, i.e., the entropy decoder 515, the inverse quantizer 520, the inverse transformer 525, the intra predictor 540, the inter predictor 535, the deblocking unit 545, and the SAO performer 550 may perform operations based on coding units having a tree structure for each largest coding unit.

In particular, the intra prediction 540 and the inter predictor 535 determine a partition mode and a prediction mode according to each of coding units having a tree structure, and the inverse transformer 525 may determine whether to split a transformation unit according to a quad-tree structure per coding unit.

An encoding operation of FIG. 10 and a decoding operation of FIG. 11 are respectively a video stream encoding operation and a video stream decoding operation in a single layer. Accordingly, when the encoder 12 of FIG. 1A encodes a video stream of at least two layers, the video encoding apparatus 10 of FIG 1A may include as many image encoder 400 as the number of layers. Similarly, when the decoder 24 of FIG. 2A decodes a video stream of at least two layers, the video decoding apparatus 20 of FIG. 2A may include as many image decoders 500 as the number of layers.

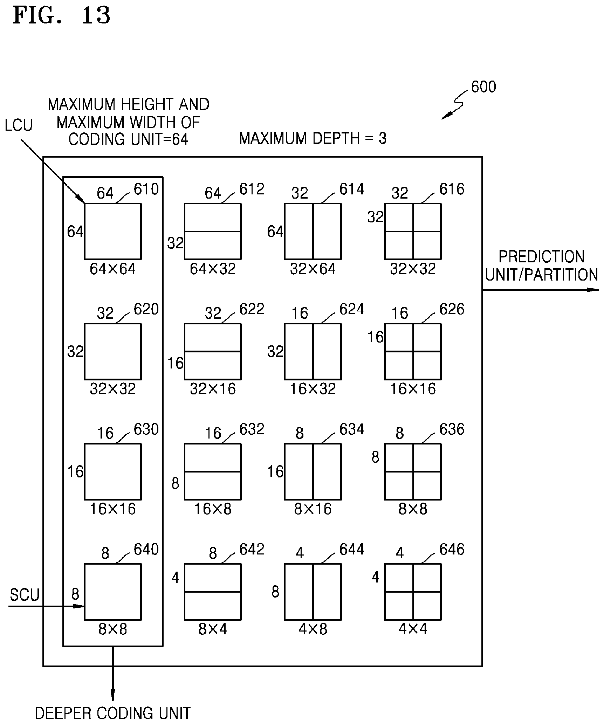

FIG. 13 is a diagram illustrating coding units according to depths and partitions, according to various embodiments.

The video encoding apparatus 100 according to various embodiments and the video decoding apparatus 200 according to various embodiments use hierarchical coding units so as to consider characteristics of an image. A maximum height, a maximum width, and a maximum depth of coding units may be adaptively determined according to the characteristics of the image, or may be variously set according to user requirements. Sizes of deeper coding units according to depths may be determined according to the predetermined maximum size of the coding unit.

In a hierarchical structure 600 of coding units according to various embodiments, the maximum height and the maximum width of the coding units are each 64, and the maximum depth is 3. In this case, the maximum depth refers to a total number of times the coding unit is split from the largest coding unit to the minimum coding unit. Since a depth deepens along a vertical axis of the hierarchical structure 600 of coding units according to various embodiments, a height and a width of the deeper coding unit are each split. Also, a prediction unit and partitions, which are bases for prediction encoding of each deeper coding unit, are shown along a horizontal axis of the hierarchical structure 600.

That is, a coding unit 610 is a largest coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions included in the coding unit 610 having a size of 64x64, i.e. a partition 610 having a size of 64x64, partitions 612 having the size of 64x32, partitions 614 having the size of 32x64, or partitions 616 having the size of 32x32.

Equally, a prediction unit of the coding unit 620 having the size of 32x32 and the depth of 1 may be split into partitions included in the coding unit 620 having a size of 32x32, i.e. a partition 620 having a size of 32x32, partitions 622 having a size of 32x16, partitions 624 having a size of 16x32, and partitions 626 having a size of 16x16.

Equally, a prediction unit of the coding unit 630 having the size of 16x16 and the depth of 2 may be split into partitions included in the coding unit 630 having a size of 16x16, i.e. a partition having a size of 16x16 included in the coding unit 630, partitions 632 having a size of 16x8, partitions 634 having a size of 8x16, and partitions 636 having a size of 8x8.

Equally, a prediction unit of the coding unit 640 having the size of 8x8 and the depth of 3 may be split into partitions included in the coding unit 640 having a size of 8x8, i.e. a partition 640 having a size of 8x8 included in the coding unit 640, partitions 642 having a size of 8x4, partitions 644 having a size of 4x8, and partitions 646 having a size of 4x4.

In order to determine the depth of the largest coding unit 610, the coding unit determiner 120 of the video encoding apparatus 100 according to various embodiments performs encoding for coding units corresponding to each depth included in the maximum coding unit 610.

The number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the largest coding unit 610 may be selected as the depth and a partition mode of the largest coding unit 610.

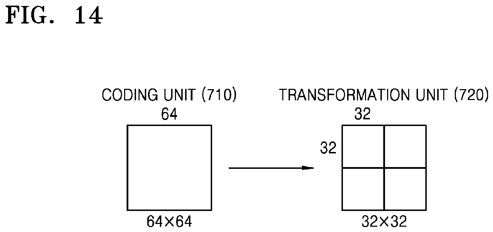

FIG. 14 is a diagram for describing a relationship between a coding unit and transformation units, according to various embodiments.

The video encoding apparatus 100 according to various embodiments or the video decoding apparatus 200 according to various embodiments encodes or decodes an image according to coding units having sizes less than or equal to a largest coding unit for each largest coding unit. Sizes of transformation units for transformation during encoding may be selected based on data units that are not larger than a corresponding coding unit.

For example, in the video encoding apparatus 100 according to various embodiments or the video decoding apparatus 200 according to various embodiments, if a size of a coding unit 710 is 64x64, transformation may be performed by using a transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

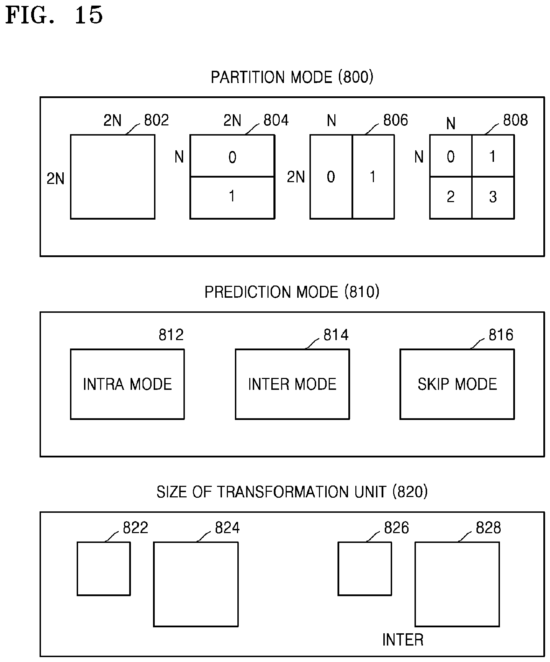

FIG. 15 illustrates a plurality of pieces of encoding information according to various embodiments.

The output unit 130 of the video encoding apparatus 100 according to various embodiments may encode and transmit information 800 about a partition mode, information 810 about a prediction mode, and information 820 about a size of a transformation unit for each coding unit corresponding to a depth, as split information.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 according to various embodiments may extract and use the information 800, 810, and 820 for decoding, according to each deeper coding unit.

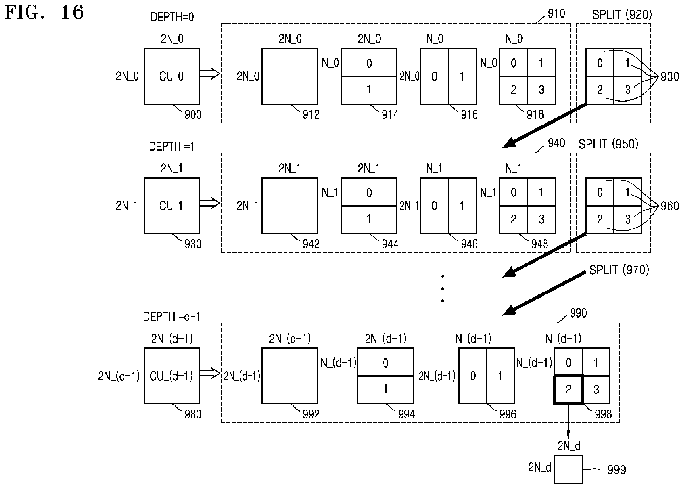

FIG. 16 is a diagram of deeper coding units according to depths, according to various embodiments.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition mode 912 having a size of 2N_0x2N_0, a partition mode 914 having a size of 2N_0xN_0, a partition mode 916 having a size of N_0x2N_0, and a partition mode 918 having a size of N_0xN_0. FIG. 9 only illustrates the partitions 912 through 918 which are obtained by symmetrically splitting the prediction unit, but a partition mode is not limited thereto, and the partitions of the prediction unit may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition mode. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition modes 912 through 916, the prediction unit 910 may not be split into a lower depth.

If the encoding error is the smallest in the partition mode 918, a depth is changed from 0 to 1 to split the partition mode 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition mode 942 having a size of 2N_1x2N_1, a partition mode 944 having a size of 2N_1xN_1, a partition mode 946 having a size of N_1x2N_1, and a partition mode 948 having a size of N_1xN_1.

If an encoding error is the smallest in the partition mode 948, a depth is changed from 1 to 2 to split the partition mode 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d1)x2N_(d-1) may include partitions of a partition mode 992 having a size of 2N_(d-1)x2N_(d-1), a partition mode 994 having a size of 2N_(d-1)xN_(d-1), a partition mode 996 having a size of N_(d-1)x2N_(d-1), and a partition mode 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N (d-1)xN_(d-1) from among the partition modes to search for a partition mode having a minimum encoding error.

Even when the partition mode 998 has the minimum encoding error, since a maximum depth is d, a coding unit CU_(d-1) having a depth of d-1 is no longer split to a lower depth, and a depth for the coding units constituting a current largest coding unit 900 is determined to be d-1 and a partition mode of the current largest coding unit 900 may be determined to be N_(d-1)xN_(d-1). Also, since the maximum depth is d, split information for a coding unit 952 having a depth of d-1 is not set.

A data unit 999 may be a 'minimum unit' for the current largest coding unit. A minimum unit according to various embodiments may be a square data unit obtained by splitting a minimum coding unit having a lowermost depth by 4. By performing the encoding repeatedly, the video encoding apparatus 100 according to various embodiments may select a depth having the least encoding error by comparing encoding errors according to depths of the coding unit 900 to determine a depth, and set a corresponding partition mode and a prediction mode as an encoding mode of the depth.

As such, the minimum encoding errors according to depths are compared in all of the depths of 1 through d, and a depth having the least encoding error may be determined as a d depth. The depth, the partition mode of the prediction unit, and the prediction mode may be encoded and transmitted as split information. Also, since a coding unit is split from a depth of 0 to a depth, only split information of the depth is set to 0, and split information of depths excluding the depth is set to 1.

The image data and encoding information extractor 220 of the video decoding apparatus 200 according to various embodiments may extract and use the information about the depth and the prediction unit of the coding unit 900 to decode the partition 912. The video decoding apparatus 200 according to various embodiments may determine a depth, in which split information is 0, as a depth by using split information according to depths, and use split information of the corresponding depth for decoding.

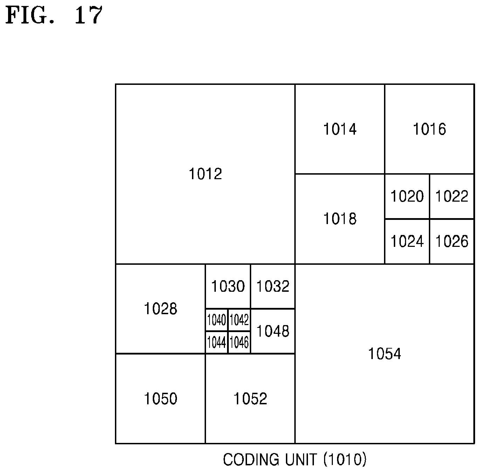

FIGS. 17, 18, and 19 are diagrams for describing a relationship between coding units, prediction units, and transformation units, according to various embodiments.

Coding units 1010 are coding units having a tree structure, according to depths determined by the video encoding apparatus 100 according to various embodiments, in a largest coding unit. Prediction units 1060 are partitions of prediction units of each of coding units according to depths, and transformation units 1070 are transformation units of each of coding units according to depths.

When a depth of a largest coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are obtained by splitting the coding units in the coding units 1010. In other words, partition modes in the coding units 1014, 1022, 1050, and 1054 have a size of 2NxN, partition modes in the coding units 1016, 1048, and 1052 have a size of Nx2N, and a partition modes of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are data units different from those in the prediction units 1060 in terms of sizes and shapes. In other words, the video encoding and decoding apparatuses 100 and 200 according to various embodiments may perform intra prediction, motion estimation, motion compensation, transformation, and inverse transformation on an individual data unit in the same coding unit.

Accordingly, encoding is recursively performed on each of coding units having a hierarchical structure in each region of a largest coding unit to determine an optimum coding unit, and thus coding units having a recursive tree structure may be obtained. Encoding information may include split information about a coding unit, information about a partition mode, information about a prediction mode, and information about a size of a transformation unit. Table 1 shows the encoding information that may be set by the video encoding and decoding apparatuses 100 and 200 according to various exemplary embodiments.

Table 1

| Split Information 0 (Encoding on Coding Unit having Size of 2Nx2N and Current Depth of d) | | | | Split Information 1 |
|---|---|---|---|---|
| Prediction Mode | Partition Type | | Size of Transformation Unit | |
| | Symmetrical Partition Type | Asymmetrical Partition Type | Split Information 0 of Transformation Unit | Split Information 1 of Transformation Unit | Repeatedly Encode Coding Units having Lower Depth of d+1 |
| Intra<br><br>Inter<br><br>Skip (Only 2Nx2N) | 2Nx2N<br>2NxN<br>Nx2N<br>NxN | 2NxnU<br>2NxnD<br>nLx2N<br>nRx2N | 2Nx2N | NxN (Symmetrical Type)<br><br>N/2xN/2 (Asymmetrical Type) | |

The output unit 130 of the video encoding apparatus 100 according to various embodiments may output the encoding information about the coding units having a tree structure, and the image data and encoding information extractor 220 of the video decoding apparatus 200 according to various embodiments may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a depth, and thus information about a partition mode, prediction mode, and a size of a transformation unit may be defined for the depth. If the current coding unit is further split according to the split information, encoding is independently performed on four split coding units of a lower depth.

A prediction mode may be one of an intra mode, an inter mode, and a skip mode. The intra mode and the inter mode may be defined in all partition modes, and the skip mode is defined only in a partition mode having a size of 2Nx2N.

The information about the partition mode may indicate symmetrical partition modes having sizes of 2Nx2N, 2NxN, Nx2N, and NxN, which are obtained by symmetrically splitting a height or a width of a prediction unit, and asymmetrical partition modes having sizes of 2NxnU, 2NxnD, nLx2N, and nRx2N, which are obtained by asymmetrically splitting the height or width of the prediction unit. The asymmetrical partition modes having the sizes of 2NxnU and 2NxnD may be respectively obtained by splitting the height of the prediction unit in 1:3 and 3:1, and the asymmetrical partition modes having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition mode of the current coding unit having the size of 2Nx2N is a symmetrical partition mode, a size of a transformation unit may be NxN, and if the partition type of the current coding unit is an asymmetrical partition mode, the size of the transformation unit may be N/2xN/2.

The encoding information about coding units having a tree structure, according to various embodiments, may include at least one of a coding unit corresponding to a depth, a prediction unit, and a minimum unit. The coding unit corresponding to the depth may include at least one of a prediction unit and a minimum unit containing the same encoding information.

Accordingly, it is determined whether adjacent data units are included in the same coding unit corresponding to the depth by comparing encoding information of the adjacent data units. Also, a corresponding coding unit corresponding to a depth is determined by using encoding information of a data unit, and thus a distribution of depths in a largest coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

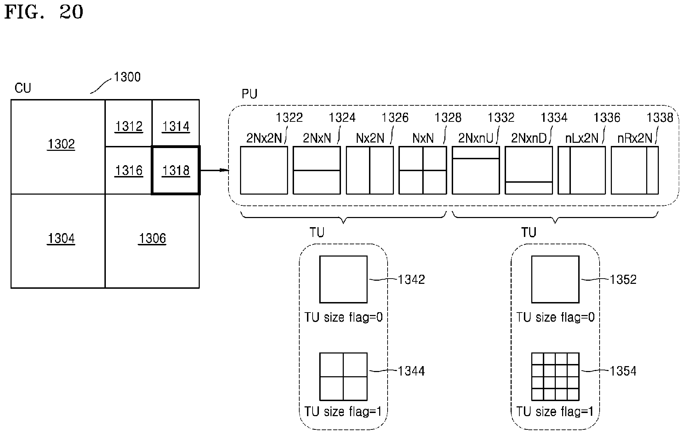

FIG. 20 is a diagram for describing a relationship between a coding unit, a prediction unit, and a transformation unit, according to encoding mode information of Table 1.

A largest coding unit 1300 includes coding units 1302, 1304, 1306, 1312, 1314, 1316, and 1318 of depths. Here, since the coding unit 1318 is a coding unit of a depth, split information may be set to 0. Information about a partition mode of the coding unit 1318 having a size of 2Nx2N may be set to be one of a partition mode 1322 having a size of 2Nx2N, a partition mode 1324 having a size of 2NxN, a partition mode 1326 having a size of Nx2N, a partition mode 1328 having a size of NxN, a partition mode 1332 having a size of 2NxnU, a partition mode 1334 having a size of 2NxnD, a partition mode 1336 having a size of nLx2N, and a partition mode 1338 having a size of nRx2N.

Split information (TU size flag) of a transformation unit is a type of a transformation index. The size of the transformation unit corresponding to the transformation index may be changed according to a prediction unit type or partition mode of the coding unit.

For example, when the partition mode is set to be symmetrical, i.e. the partition mode 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition mode is set to be asymmetrical, i.e., the partition mode 1332, 1334, 1336, or 1338, a transformation unit 1352 having a size of 2Nx2N is set if a TU size flag is 0, and a transformation unit 1354 having a size of N/2xN/2 is set if a TU size flag is 1.

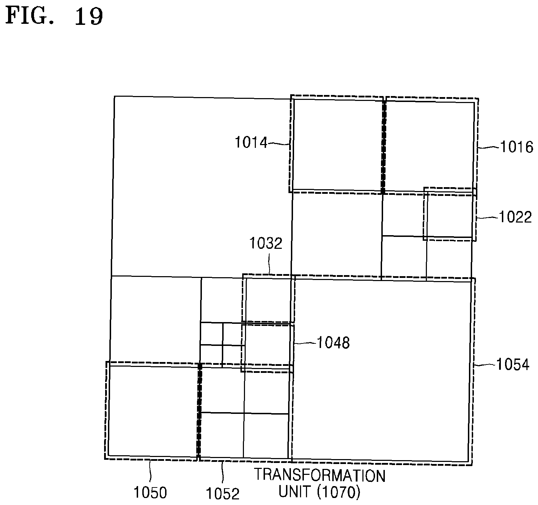

Referring to FIG. 19, the TU size flag is a flag having a value or 0 or 1, but the TU size flag according to some exemplar embodiments is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to various embodiments, together with a maximum size and minimum size of the transformation unit. The video encoding apparatus 100 according to various embodiments is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 according to various embodiments may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max (\text{MinTransformSize}, \text{RootTuSize}/(2^\wedge\text{MaxTransformSizeIndex})) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to various embodiments, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) ......... (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ..........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure as described with reference to FIGS. 8 through 20, image data of a spatial region is encoded for each coding unit of a tree structure. According to the video decoding method based on coding units having a tree structure, decoding is performed for each largest coding unit to reconstruct image data of a spatial region. Thus, a picture and a video that is a picture sequence may be reconstructed. The reconstructed video may be reproduced by a reproducing apparatus, stored in a storage medium, or transmitted through a network.

The embodiments according to the present disclosure may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the inter-layer video encoding method and/or the video encoding method described above with reference to FIGS. 1A through 20 will be collectively referred to as a 'video encoding method of the present disclosure'. In addition, the inter-layer video decoding method and/or the video decoding method described above with reference to FIGS. 1A through 20 will be referred to as a 'video decoding method of the present disclosure'.

Also, a video encoding apparatus including the inter-layer video encoding apparatus 10, the video encoding apparatus 100, or the image encoder 400, which has been described with reference to FIGS. 1A through 20, will be referred to as a 'video encoding apparatus of the present disclosure'. In addition, a video decoding apparatus including the inter-layer video decoding apparatus 20, the video decoding apparatus 200, or the image decoder 500, which has been descried with reference to FIGS. 1A through 20, will be collectively referred to as a 'video decoding apparatus of the present disclosure'.

A computer-readable recording medium storing a program, e.g., a disc 26000, according to various embodiments will now be described in detail.

FIG. 21 is a diagram of a physical structure of the disc 26000 in which a program according to various embodiments is stored. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000 according to the various embodiments, a program that executes the quantization parameter determining method, the video encoding method, and the video decoding method described above may be assigned and stored.

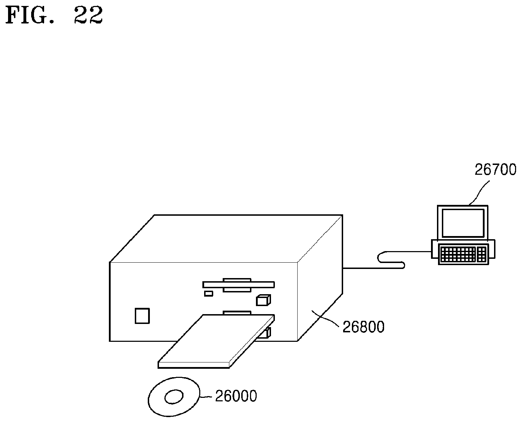

A computer system embodied using a storage medium that stores a program for executing the video encoding method and the video decoding method as described above will now be described with reference to FIG. 22.

FIG. 22 is a diagram of a disc drive 26800 for recording and reading a program by using the disc 26000. A computer system 27000 may store a program that executes at least one of a video encoding method and a video decoding method of the present disclosure, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one of a video encoding method and a video decoding method of the present disclosure may be stored not only in the disc 26000 illustrated in FIG. 21 or 22 but also in a memory card, a ROM cassette, or a solid state drive (SSD).

A system to which the video encoding method and a video decoding method described above are applied will be described below.

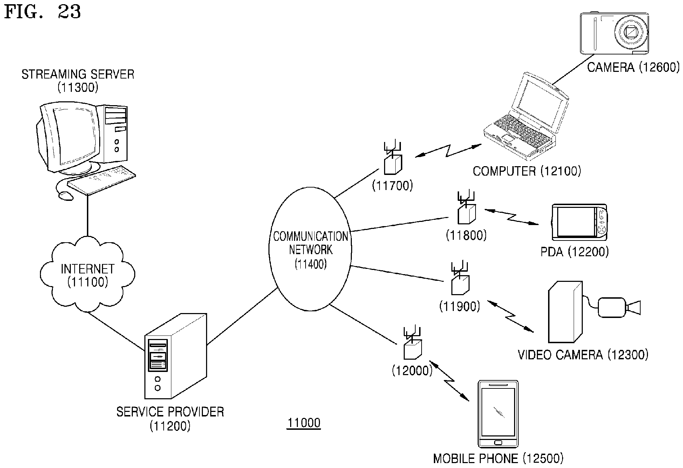

FIG. 23 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

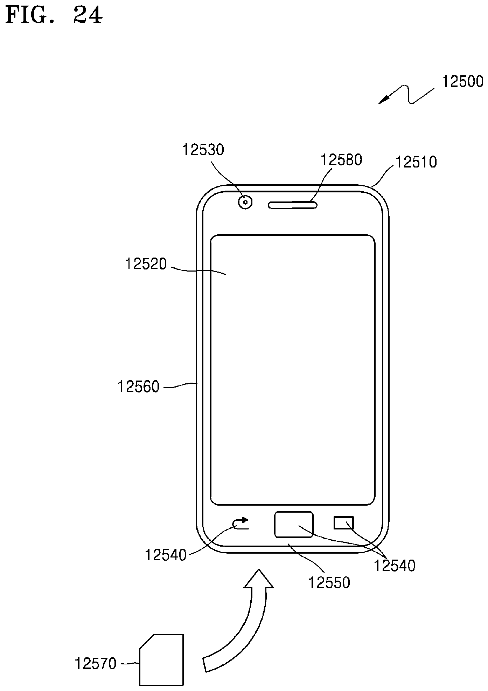

However, the content supply system 11000 is not limited to the structure as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded by the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 according to various embodiments may encode content data recorded by a user using the video camera 12300, the camera 12600, the mobile phone 12500, or another imaging device, e.g., content recorded during a concert, and may transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and to decode and reproduce the encoded content data in real-time, thereby enabling personal broadcasting.

The video encoding apparatus and the video decoding apparatus of the present disclosure may be applied to encoding and decoding operations of the plurality of independent devices included in the content supply system 11000.

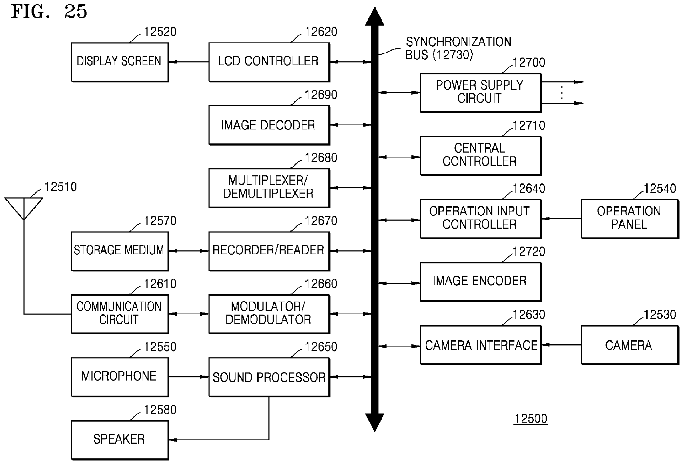

The mobile phone 12500 included in the content supply system 11000 according to an embodiment will now be described in greater detail with referring to FIGS. 24 and 25.

FIG. 24 illustrates an external structure of the mobile phone 12500 to which the video encoding method and the video decoding method of the present disclosure are applied, according to various embodiments. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 25 illustrates an internal structure of the mobile phone 12500. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off state to a 'power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 described above. The image encoder 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoder 12690 may correspond to that of the video decoding apparatus 200 described above. The image decoder 12690 may decode the encoded video data to obtain reconstructed video data and provide the reconstructed video data to the display screen 12520 via the LCD controller 12620, according to a video decoding method employed by the video decoding apparatus 200 or the image decoder 500 described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both the video encoding apparatus and the video decoding apparatus of the present disclosure, may be a transceiving terminal including only the video encoding apparatus of the present disclosure, or may be a transceiving terminal including only the video decoding apparatus of the present disclosure.

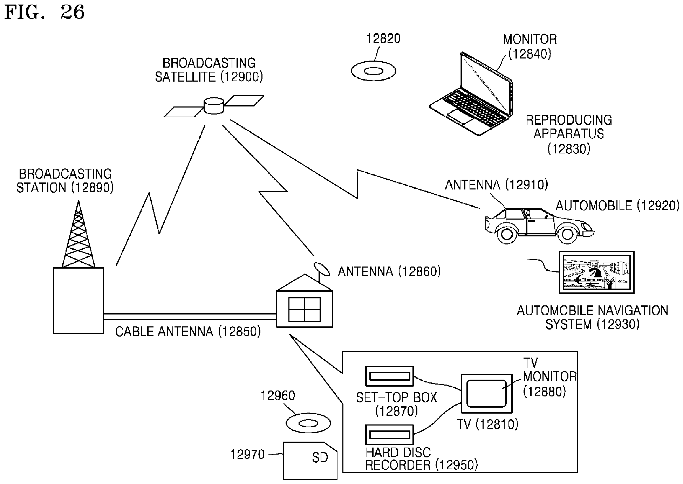

A communication system according to the present disclosure is not limited to the communication system described above with reference to FIG. 24. For example, FIG. 26 illustrates a digital broadcasting system employing a communication system, according to various embodiments. The digital broadcasting system of FIG. 26 according to various embodiments may receive a digital broadcast transmitted via a satellite or a terrestrial network by using the video encoding apparatus and the video decoding apparatus of the present disclosure.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When the video decoding apparatus of the present disclosure is implemented in a reproducing apparatus 12830, the reproducing apparatus 12830 may parse and decode an encoded video stream recorded on a storage medium 12820, such as a disc or a memory card to reconstruct digital signals. Thus, the reconstructed video signal may be reproduced, for example, on a monitor 12840.

In the set-top box 12870 connected to the antenna 12860 for a satellite/terrestrial broadcast or a cable antenna 12850 for receiving a cable television (TV) broadcast, the video decoding apparatus of the present disclosure may be installed. Data output from the set-top box 12870 may also be reproduced on a TV monitor 12880.

As another example, the video decoding apparatus of the present disclosure may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by the video encoding apparatus of the present disclosure and may then be recorded to and stored in a storage medium. In more detail, an image signal may be stored in a DVD disc 12960 by a DVD recorder or may be stored in a hard disc by a hard disc recorder 12950. As another example, the video signal may be stored in an SD card 12970. If the hard disc recorder 12950 includes the video decoding apparatus of the present disclosure according to various embodiments, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 26. For example, the computer 12100 and the TV receiver 12810 may not include the camera 12530, the camera interface 12630, and the image encoder 12720 of FIG. 26.

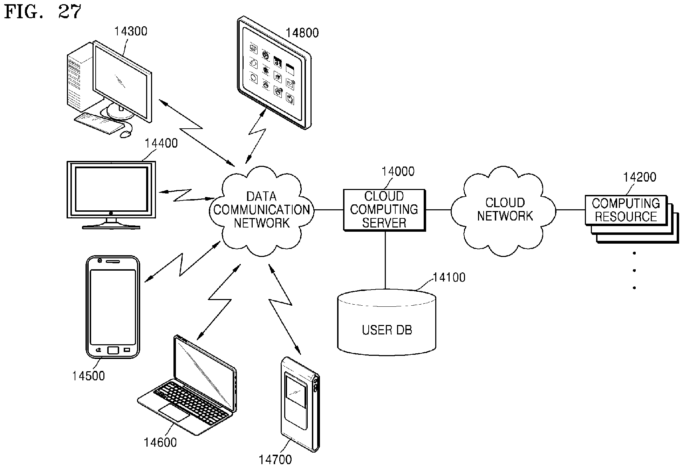

FIG. 27 is a diagram illustrating a network structure of a cloud computing system using a video encoding apparatus and a video decoding apparatus, according to various embodiments.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include the video decoding apparatus of the present disclosure as described above with reference to FIGS. 1A through 20. As another example, the user terminal may include the video encoding apparatus of the present disclosure as described above with reference to FIGS. 1A through 20. Alternatively, the user terminal may include both the video decoding apparatus and the video encoding apparatus of the present disclosure as described above with reference to FIGS. 1A through 20.

Various applications of a video encoding method, a video decoding method, a video encoding apparatus, and a video decoding apparatus according to various embodiments described above with reference to FIGS. 1A through 20 have been described above with reference to FIGS. 21 through 27. However, methods of storing the video encoding method and the video decoding method in a storage medium or methods of implementing the video encoding apparatus and the video decoding apparatus in a device, according to various embodiments, are not limited to the embodiments described above with reference to FIGS. 21 through 27.

It will be understood by one of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present disclosure.

**Claims**

1. An inter-layer video decoding method comprising:

   obtaining, from a bitstream, depth refinement information indicating whether a disparity vector of a current block of a second layer is obtainable by using a depth image of a first layer; and

   if the depth refinement information indicates that the depth image of the first layer is available, determining the disparity vector of the current block of the second layer, wherein the disparity vector comprises a predetermined second component value and a first component value that is determined by using a base disparity vector and the depth image of the first layer.

**2.** The inter-layer video decoding method of claim 1, wherein the determining of the disparity vector of the current block comprises determining the disparity vector of the current block of the second layer, wherein the disparity vector comprises a predetermined vertical component value and a horizontal component value that is determined by using the base disparity vector and the depth image of the first layer.

**3.** The inter-layer video decoding method of claim 1, wherein the predetermined second component value is 0.

**4.** The inter-layer video decoding method of claim 1, wherein the predetermined second component value is a vertical component value of the base disparity vector.

**5.** The inter-layer video decoding method of claim 1, wherein, if the depth refinement information indicates that the depth image of the first layer is not available, the determining of the disparity vector of the current block comprises determining the base disparity vector as the disparity vector of the current block.

**6.** The inter-layer video decoding method of claim 1, wherein, if the depth refinement information indicates that the depth image of the first layer is not available, the determining of the disparity vector of the current block comprises determining the disparity vector of the current block which comprises the first component value determined by using the base disparity vector and the predetermined second component value.

**7.** The inter-layer video decoding method of claim 1, wherein the determining of the disparity vector of the current block further comprises determining the base disparity vector by using a neighboring block of the current block of the second layer.

**8.** The inter-layer video decoding method of claim 1, wherein, when the base disparity vector cannot be determined by using a neighboring block of the current block of the second layer, the determining of the disparity vector of the current block further comprises determining the base disparity vector as (0, 0).

**9.** The inter-layer video decoding method of claim 1, wherein the determining of the disparity vector of the current block comprises:

obtaining depth values of a corner of a reference block of the depth image of the first layer, wherein the depth values correspond to the base disparity vector; and
determining the disparity vector of the current block of the second layer by using at least one of the obtained depth values of the corner.

**10.** The inter-layer video decoding method of claim 1, further comprising obtaining, from the bitstream, mode information indicating a coding mode of the current block of the second layer, and
wherein the determining of the disparity vector of the current block comprises,
when the coding mode of the current block is a first mode, determining the disparity vector of the current block which comprises the predetermined second component value and the first component value that is determined by using the base disparity vector and the depth image of the first layer, and
when the coding mode of the current block is a second mode, determining the base disparity vector as the disparity vector of the current block.

**11.** An inter-layer video decoding apparatus comprising:

an obtainer configured to obtain, from a bitstream, depth refinement information indicating whether a disparity vector of a current block of a second layer is obtainable by using a depth image of a first layer; and
a disparity vector determiner configured to, if the depth refinement information indicates that the depth image of the first layer is available, determine the disparity vector of the current block of the second layer, wherein the disparity vector comprises a predetermined second component value and a first component value that is determined by using a base disparity vector and the depth image of the first layer.

**12.** An inter-layer video encoding method comprising:

determining a disparity vector of a current block of a second layer, wherein the disparity vector comprises a predetermined second component value and a first component value that is determined by using a base disparity vector and a depth image of a first layer; and

adding, to a bitstream, depth refinement information indicating whether the disparity vector of the current block of the second layer is obtainable by using the depth image of the first layer.

13. The inter-layer video encoding method of claim 12, wherein the determining of the disparity vector of the current block comprises determining the disparity vector of the current block of the second layer, wherein the disparity vector comprises a predetermined vertical component value and a horizontal component value that is determined by using the base disparity vector and the depth image of the first layer.

14. An inter-layer video encoding apparatus comprising:

a disparity vector determiner configured to determine a disparity vector of a current block of a second layer, wherein the disparity vector comprises a predetermined second component value and a first component value that is determined by using a base disparity vector and a depth image of a first layer; and
a bitstream generator configured to add, to a bitstream, depth refinement information indicating whether the disparity vector of the current block of the second layer is obtainable by using the depth image of the first layer.

15. A computer-readable recording medium having recorded thereon a program for executing the inter-layer video decoding method of claim 1.

FIG. 1A

10

12

ENCODER

14

FIRST LAYER
ENCODER

18

BITSTREAM
GENERATOR

16

DISPARITY VECTOR
DETERMINER

17

SECOND LAYER ENCODER

# FIG. 1B

```
( START )
```

DETERMINE DISPARITY VECTOR OF CURRENT BLOCK OF SECOND
LAYER WHICH INCLUDES FIRST COMPONENT VALUE
AND PREDETERMINED SECOND COMPONENT VALUE,
WHEREIN FIRST COMPONENT VALUE IS DETERMINED BY USING
BASE DISPARITY VECTOR AND DEPTH IMAGE OF FIRST LAYER — 11

ADD, TO BITSTREAM, DEPTH REFINEMENT INFORMATION INDICATING
WHETHER DISPARITY VECTOR OF CURRENT BLOCK OF SECOND
LAYER IS OBTAINABLE BY USING DEPTH IMAGE OF FIRST LAYER — 13

```
( END )
```

FIG. 2A

```
                                                      ┌ 20
                                              ┌ 24
                            ┌──────────────────────────────────┐
                            │ DECODER                          │
                            │              ┌ 26                 │
              ┌ 22          │    ┌──────────────────────┐       │
        ┌─────────────┐     │    │    FIRST LAYER       │       │
───────▶│  OBTAINER   │─────┼───▶│    DECODER           │───────┼────▶
        └─────────────┘     │    └──────────────────────┘       │
              │             │              ┌ 28                 │
              │             │    ┌──────────────────────┐       │
              │             │    │ ┌──────────────────┐ │       │
              └────────────▶│    │ │ DISPARITY VECTOR │ │─29    │
                            │    │ │ DETERMINER       │ │───────┼────▶
                            │    │ └──────────────────┘ │       │
                            │    │ SECOND LAYER DECODER │       │
                            │    └──────────────────────┘       │
                            └──────────────────────────────────┘
```

# FIG. 2B

START

OBTAIN, FROM BITSTREAM, DEPTH REFINEMENT INFORMATION INDICATING WHETHER DISPARITY VECTOR OF CURRENT BLOCK OF SECOND LAYER IS OBTAINABLE BY USING DEPTH IMAGE OF FIRST LAYER — 21

IF DEPTH REFINEMENT INFORMATION INDICATES THAT DEPTH IMAGE OF FIRST LAYER IS AVAILABLE, DETERMINE DISPARITY VECTOR OF CURRENT BLOCK OF SECOND LAYER WHICH INCLUDES FIRST COMPONENT VALUE AND PREDETERMINED SECOND COMPONENT VALUE, WHEREIN FIRST COMPONENT VALUE IS DETERMINED BY USING BASE DISPARITY VECTOR AND DEPTH IMAGE OF FIRST LAYER — 23

END

FIG. 3

# FIG. 4A

FIG. 4B

FIG. 4C

1560  1570

1500

CURRENT
BLOCK

REFERENCE PICTURE

CURRENT PICTURE

# FIG. 5

FIRST LAYER

1731 1730

1720

1732

1734

1733

mvRefinedDisp

mvDisp

1700

SECOND LAYER

CURRENT
BLOCK

1710

COLOR IMAGE

DEPTH IMAGE

FIG. 6A

START

DETERMINE BASE DISPARITY VECTOR — 1601

DEPTH IMAGE OF FIRST LAYER IS AVAILABLE ? — 1603

NO

YES

DETERMINE DISPARITY VECTOR OF CURRENT BLOCK OF SECOND LAYER BY USING BASE DISPARITY VECTOR AND DEPTH IMAGE OF FIRST LAYER — 1605

DETERMINE BASE DISPARITY VECTOR AS DISPARITY VECTOR OF CURRENT BLOCK OF SECOND LAYER — 1607

END

# FIG. 6B

```
                    ( START )
                        │
                        ▼
        ┌─────────────────────────────────┐
        │ DETERMINE BASE DISPARITY VECTOR │── 1611
        └─────────────────────────────────┘
                        │
                        ▼
                     1613
                   ╱      ╲
                 ╱  CODING  ╲
               ╱   MODE OF    ╲        NO
          ◀──◁ CURRENT BLOCK OF ▷──────────────────┐
               ╲ SECOND LAYER ╱                     │
                 ╲IS FIRST    ╱                      │
                   ╲ MODE ? ╱                        │
                     ╲    ╱                          │
                      │ YES                          │
                      ▼                              │
                    1617                             ▼
                   ╱      ╲           ┌──────────────────────────┐
                 ╱  DEPTH  ╲    NO    │ DETERMINE BASE DISPARITY │
               ╱   IMAGE    ╲─────────│ VECTOR AS DISPARITY      │── 1615
               ╲ OF FIRST   ╱         │ VECTOR OF CURRENT        │
                 ╲ LAYER IS ╱         │ BLOCK OF SECOND LAYER    │
                  ╲AVAILABLE?         └──────────────────────────┘
                     ╲  ╱                          │
                      │ YES                         │
                      ▼                             │
        ┌─────────────────────────────────┐        │
        │ DETERMINE DISPARITY VECTOR OF   │        │
        │ CURRENT BLOCK OF SECOND LAYER   │── 1619 │
        │ BY USING BASE DISPARITY VECTOR  │        │
        │ AND DEPTH IMAGE OF FIRST LAYER  │        │
        └─────────────────────────────────┘        │
                        │                           │
                        ▼◀──────────────────────────┘
                    ( END )
```

# FIG. 6C

START

SEARCH FOR NEIGHBORING BLOCK CANDIDATE HAVING MOTION VECTOR IN INTER-LAYER DIRECTION FROM AMONG NEIGHBORING BLOCK CANDIDATES OF CURRENT BLOCK OF SECOND LAYER — 1621

NEIGHBORING BLOCK CANDIDATE HAVING MOTION VECTOR IN INTER-LAYER DIRECTION IS PRESENT ? — 1623

YES

DETERMINE MOTION VECTOR IN INTER-LAYER DIRECTION OF FOUND NEIGHBORING BLOCK CANDIDATE AS BASE DISPARITY VECTOR OF CURRENT BLOCK — 1625

NO

SEARCH FOR NEIGHBORING BLOCK CANDIDATE HAVING DISPARITY VECTOR INFORMATION — 1627

NEIGHBORING BLOCK CANDIDATE HAVING DISPARITY VECTOR INFORMATION IS PRESENT ? — 1629

YES

DETERMINE DISPARITY VECTOR OF FOUND NEIGHBORING BLOCK CANDIDATE AS BASE DISPARITY VECTOR — 1631

NO

DETERMINE BASE DISPARITY VECTOR AS (0, 0) — 1633

END

## FIG. 7

| |
|---|
| sps_3d_extension( ) { |
|   for( d = 0; d <= 1; d++ ) { |
|     iv_mv_pred_flag[ d ] |
|     iv_mv_scaling_flag[ d ] |
|     if( d = = 0 ) { |
|       log2_sub_pb_size_minus3[ d ] |
|       iv_res_pred_flag[ d ] |
|       **depth_refinement_flag[ d ]** |
|       view_synthesis_pred_flag[ d ] |
|       depth_based_blk_part_flag[ d ] |
|     } else { |
|       mpi_flag[ d ] |
|       log2_mpi_sub_pb_size_minus3[ d ] |
|       intra_contour_flag[ d ] |
|       intra_sdc_wedge_flag[ d ] |
|       qt_pred_flag[ d ] |
|       inter_sdc_flag[ d ] |
|       intra_single_flag[ d ] |
|     } |
|   } |
| } |

710 → depth_refinement_flag[ d ]

## FIG. 8

LCU SPLITTER — 110
CODING UNIT DETERMINER — 120
OUTPUT UNIT — 130
100

FIG. 9

200

210

220

230

| RECEIVER | IMAGE DATA AND ENCODING INFORMATION EXTRACTOR | IMAGE DATA DECODER |

# FIG. 10

| | | | |
|---|---|---|---|
| 64<br>64 **64×64** | 64<br>32 **64×32** | 32<br>64 **32×64** | 32<br>32 **32×32** |
| 32<br>32 **32×32** | 32<br>16 **32×16** | 16<br>32 **16×32** | 16<br>16 **16×16** |
| 16<br>16 **16×16** | 16<br>8 **16×8** | 8<br>16 **8×16** | 8<br>8 **8×8** |
| 8<br>8 **8×8** | 8<br>4 **8×4** | 4<br>8 **4×8** | 4<br>4 **4×4** |

315

RESOLUTION : 1920×1080
MAXIMUM SIZE OF CODING UNIT : 64
MAXIMUM DEPTH = 2

— 310

RESOLUTION : 1920×1080
MAXIMUM SIZE OF CODING UNIT : 64
MAXIMUM DEPTH = 3

— 320

RESOLUTION : 352×288
MAXIMUM SIZE OF CODING UNIT : 16
MAXIMUM DEPTH = 1

— 330

335  325

FIG. 11

FIG. 12

# FIG. 13

MAXIMUM HEIGHT AND
MAXIMUM WIDTH OF
CODING UNIT=64      MAXIMUM DEPTH = 3

LCU

600

64 / 610
64      64×64

64 / 612
32      64×32

32 / 614
64      32×64

32 / 616
32      32×32

32 / 620
32      32×32

32 / 622
16      32×16

16 / 624
32      16×32

16 / 626
16      16×16

16 / 630
16      16×16

16 / 632
8      16×8

8 / 634
16      8×16

8 / 636
8      8×8

8 / 640
8      8×8

8 / 642
4      8×4

4 / 644
8      4×8

4 / 646
4      4×4

SCU

PREDICTION
UNIT/PARTITION

DEEPER CODING UNIT

## FIG. 14

CODING UNIT (710)          TRANSFORMATION UNIT (720)

64                                    32

64×64                              32×32

# FIG. 15

PARTITION MODE (800)

PREDICTION MODE (810)

SIZE OF TRANSFORMATION UNIT (820)

FIG. 16

DEPTH=0

2N_0

2N_0 | CU_0 |
900

→

```
                                          ┌─ 910              SPLIT (920)
  ┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐  ┌ ─ ─ ─ ─ ─ ─ ─ ┐
    2N_0          2N_0         N_0          N_0
           N_0   ┌───┐              ┌───┬───┐       ┌───┬───┐
   2N_0    2N_0  │ 0 │  2N_0 ┌──┬──┐│ 0 │ 1 │       │ 0 │ 1 │──→ 930
           │───  ├───┤       │0 │ 1││───┼───┤       ├───┼───┤
                 │ 1 │       │  │  ││ 2 │ 3 │       │ 2 │ 3 │
                 └───┘       └──┴──┘└───┴───┘       └───┴───┘
     912          914         916          918
```

DEPTH =1

2N_1

2N_1 | CU_1 |
930

→

```
                                          ┌─ 940              SPLIT (950)
  ┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐  ┌ ─ ─ ─ ─ ─ ─ ─ ┐
    2N_1          2N_1         N_1          N_1
           N_1   ┌───┐              ┌───┬───┐       ┌───┬───┐
   2N_1    2N_1  │ 0 │  2N_1 ┌──┬──┐│ 0 │ 1 │       │ 0 │ 1 │──→ 960
           │───  ├───┤       │0 │ 1││───┼───┤       ├───┼───┤
                 │ 1 │       │  │  ││ 2 │ 3 │       │ 2 │ 3 │
                 └───┘       └──┴──┘└───┴───┘       └───┴───┘
     942          944         946          948
```

SPLIT (970)

⋮

DEPTH =d-1

2N_(d-1)

2N_(d-1) | CU_(d-1) |
980

→

```
                                          ┌─ 990
  ┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
    2N_(d-1)        2N_(d-1)       N_(d-1)        N_(d-1)
              N_(d-1) ┌───┐                 ┌───┬───┐
   2N_(d-1)  2N_(d-1) │ 0 │ 2N_(d-1) ┌──┬──┐│ 0 │ 1 │  N_(d-1) ┌───┬───┐
              │───     ├───┤         │0 │ 1││───┼───┤          │ 0 │ 1 │
                       │ 1 │         │  │  ││   │   │          ├───┼───┤
                       └───┘         └──┴──┘└───┴───┘          │ 2 │ 3 │
     992          994         996                                998
```

2N_d

2N_d | |
999

# FIG. 17

CODING UNIT (1010)

FIG. 18

1014 1016

1022

1032

1048

1054

1050 1052

PREDICTION UNIT (1060)

FIG. 19

1014

1016

1022

1032

1048

1054

1050    1052    TRANSFORMATION
                UNIT (1070)

FIG. 20

CU

1300

| 1302 | 1312 | 1314 |
| | 1316 | 1318 |
| 1304 | 1306 | |

PU

1322 · 2Nx2N
1324 · 2NxN
1326 · Nx2N
1328 · NxN
1332 · 2NxnU
1334 · 2NxnD
1336 · nLx2N
1338 · nRx2N

TU

1342 — TU size flag=0

1344 — TU size flag=1

TU

1352 — TU size flag=0

1354 — TU size flag=1

FIG. 21

FIG. 22

FIG. 23

STREAMING SERVER
(11300)

CAMERA (12600)

COMPUTER (12100)

(11700)

COMMUNICATION
NETWORK
(11400)

(11800)

PDA (12200)

INTERNET
(11100)

(11900)

VIDEO CAMERA (12300)

SERVICE PROVIDER
(11200)

11000

(12000)

MOBILE PHONE (12500)

FIG. 24

FIG. 25

FIG. 26

BROADCASTING
SATELLITE (12900)

12820

MONITOR
(12840)

REPRODUCING
APPARATUS
(12830)

BROADCASTING
STATION (12890)

ANTENNA (12910)

AUTOMOBILE (12920)

ANTENNA (12860)

AUTOMOBILE NAVIGATION
SYSTEM (12930)

CABLE ANTENNA (12850)

12960

12970 — SD

SET-TOP BOX
(12870)

HARD DISC
RECORDER (12950)

TV
MONITOR
(12880)

TV (12810)

FIG. 27

14300

14800

14400

14000
CLOUD
COMPUTING
SERVER

DATA
COMMUNICATION
NETWORK

CLOUD
NETWORK

14200
COMPUTING
RESOURCE

14100

USER DB

14500

14600

14700

## INTERNATIONAL SEARCH REPORT

| International application No. |
|---|
| **PCT/KR2015/002355** |

**A. CLASSIFICATION OF SUBJECT MATTER**

***H04N 19/503(2014.01)i, H04N 19/50(2014.01)i, H04N 19/51(2014.01)i***

According to International Patent Classification (IPC) or to both national classification and IPC

**B. FIELDS SEARCHED**

Minimum documentation searched (classification system followed by classification symbols)
H04N 19/503; H04N 19/50; H04N 13/00; H04N 7/26; H04N 7/32; H04N 19/51

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: layer, depth image, disparity vector

**C. DOCUMENTS CONSIDERED TO BE RELEVANT**

| Category* | Citation of document, with indication, where appropriate, of the relevant passages | Relevant to claim No. |
|---|---|---|
| X | G. TECH et al. "3D-HEVC Draft Text 3.", JCT3V document JCT3V-G1001v1, 18 February 2014, pages 1-89.<br>See pages 4-7, 18, 73, 84-85. | 1-15 |
| A | KR 10-2014-0011481 A (MEDIATEK INC.) 28 January 2014<br>See abstract, paragraphs [0037]-[0076], claims 1-4 and figures 3-5. | 1-15 |
| A | WO 2014-008817 A1 (MEDIATEK INC.) 16 January 2014<br>See abstract, claims 1-32 and figure 7. | 1-15 |
| A | US 2013-0335522 A1 (ZHANG, Li et al.) 19 December 2013<br>See abstract, paragraphs [0127]-[0135] and figures 7-9. | 1-15 |
| A | WO 2013-159326 A1 (MEDIATEK SINGAPORE PTE. LTD.) 31 October 2013<br>See abstract, claims 1-6 and figure 1. | 1-15 |

| ☐ Further documents are listed in the continuation of Box C. | ☒ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 MAY 2015 (28.05.2015) | **28 MAY 2015 (28.05.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/002355**

| Patent document cited in search report | Publication date | Patent family member | Publication date |
|---|---|---|---|
| KR 10-2014-0011481 A | 28/01/2014 | CN 103597837 A<br>EP 2721825 A1<br>US 2014-0078254 A1<br>WO 2012-171442 A1 | 19/02/2014<br>23/04/2014<br>20/03/2014<br>20/12/2012 |
| WO 2014-008817 A1 | 16/01/2014 | EP 2839664 A1 | 25/02/2015 |
| US 2013-0335522 A1 | 19/12/2013 | CN 104350749 A<br>WO 2013-188028 A1 | 11/02/2015<br>19/12/2013 |
| WO 2013-159326 A1 | 31/10/2013 | NONE | |

Form PCT/ISA/210 (patent family annex) (July 2009)